# NEUE EUROPÄISCHE PATENTSCHRIFT

(11) **EP 2 759 421 B2**
(45) Veröffentlichungstag und Bekanntmachung des Hinweises auf die Entscheidung über den Einspruch: **22.02.2023**
(45) Hinweis auf die Patenterteilung: 22.01.2020
(21) Anmeldenummer: 14152505.5
(22) Anmeldetag: 24.01.2014
(51) Int. Cl.: B60D 1/06

(54) **Anhängekupplung und Lastenträgereinrichtung für eine Anhängekupplung**
Trailer coupling and load support device for a trailer coupling
Attelage et dispositif de support de charges d'attelage

(30) Priorität: 25.01.2013 DE 102013100780
(43) Veröffentlichungstag der Anmeldung: 30.07.2014
(60) Teilanmeldung: 20152669.6
(73) Patentinhaber: ACPS Automotive GmbH, 74379 Ingersheim (DE)
(72) Erfinder: Kadnikov, Aleksej, 71229 Leonberg (DE); Gentner, Wolfgang, 71711 Steinheim (DE); Rimmelspacher, Bernhard, 76287 Rheinstetten (DE)
(74) Vertreter: Hoeger, Stellrecht & Partner Patentanwälte mbB

(56) Entgegenhaltungen:
- WO-A1-82/00119
- DE-A1-102008 009 150
- DE-A1-102011 004 653
- DE-A1-102011 004 653
- DE-U1- 9 305 689
- US-A- 2 523 500
- US-A1- 2005 205 629
- US-A1- 2007 187 448

## Beschreibung

Die Erfindung betrifft eine Anhängekupplung für Kraftfahrzeuge umfassend ein mit einem ersten Ende mittels eines Kugelhalsträgers fahrzeugfest an einer Heckpartie eines Kraftfahrzeugs montierbaren Kugelhals der an einem zweiten Ende eine Kupplungskugel trägt.

Derartige Anhängekupplungen sind aus dem Stand der Technik bekannt.

Primär dienen derartige Anhängekupplungen dazu, einen Anhänger anzuhängen, welcher mit einer Zugkugelkupplung an der Kupplungskugel angreift.

Vielfach dient jedoch auch eine Anhängekupplung dazu, einen Lastenträger, beispielsweise für Fahrräder oder Ski oder andere Sportgeräte, zu montieren, um diese in einfacher Weise transportieren zu können, wie beispielsweise durch die DE 10 2008 009 150 A1 oder die DE 10 2011 004 653 A1 oder die US 2005/205629 A1 offenbart.

Derartige Anhängekupplungen sind aus der DE 10 2011 004 653 A1 oder der DE 930 56 89 U1 bekannt.

Der Erfindung liegt daher die Aufgabe zugrunde, eine Anhängekupplung der eingangs beschriebenen Art derart zu verbessern, dass in einfacher Weise Lastenträger montiert und sicher gehalten werden können.

Diese Aufgabe wird bei einer Anhängekupplung der eingangs beschriebenen Art erfindungsgemäß durch die Merkmale des Anspruchs 1 gelöst.

Insbesondere ist gemäß der Erfindung vorgesehen, dass an dem Kugelhals in einem definierten Abstand von der Kupplungskugel mindestens ein Positionierkörper zur Positionierung einer auf die Kupplungskugel und den Kugelhals aufsetzbaren Lastenträgerhalteeinrichtung angeordnet ist.

Der Vorteil der erfindungsgemäßen Lösung ist dabei darin zu sehen, dass ein derartiger Positionierkörper die Möglichkeit eröffnet, in einfacher Weise die Lastenträgerhalteeinrichtung und relativ zum Kugelhals zu positionieren, das heißt auszurichten und in der ausgerichteten Stellung zu halten.

Insbesondere erfolgt dabei das Positionieren der Lastenträgerhalteeinrichtung auch dadurch, dass sich diese an der Kupplungskugel abstützt, so dass dabei die Positionierung der Lastenträgerhalteeinrichtung einerseits über ein Abstützen an der Kupplungskugel und andererseits über ein Abstützen an dem Positionierkörper erfolgt.

Hinsichtlich der Anordnung des Positionierkörpers am Kugelhals ist grundsätzlich ein großer Freiheitsgrad gegeben, so dass der Positionierkörper theoretisch an jeder Stelle des Kugelhalses angeordnet sein könnte.

Die erfindungsgemäße Lösung sieht vor, dass der Positionierkörper an einem Kugelhalsabschnitt des Kugelhalses angeordnet ist, welcher an einen die Kupplungskugel tragenden Kugelansatz des Kugelhalses angrenzt.

Eine derartige Anordnung des Positionierkörpers hat den Vorteil, dass es damit möglich ist, bei sehr vielen Formen des Kugelhalses den Positionierkörper stets im gleichen definierten Abstand von der Kupplungskugel und weitgehend unabhängig von der Form des Kugelhalses, insbesondere einer Abkröpfung desselben, anzuordnen und eine standardisierte Position des Positionierkörpers relativ zur Kupplungskugel einzuhalten.

Hinsichtlich der Ausbildung des Positionierkörpers wurden dabei ebenfalls noch keine näheren Angaben gemacht.

Erfindungsgemäß ist ferner vorgesehen, dass der Positionierkörper sich quer zu einem Verlauf des diesen Positionierkörper tragenden Kugelhalsabschnitts erstreckt, das heißt, dass ausgehend von einem Verlauf des Kugelhalses oder des Kugelhalsabschnittes der Positionierkörper auf diesem aufsitzt oder von diesem absteht oder den Kugelhalsabschnitt ganz oder teilweise umschließt.

Dabei kann der Positionierkörper ein separater Körper sein, der durch Montageelemente mit dem Kugelhalsabschnitt verbunden ist oder durch Formschluss mit an dem Kugelhalsabschnitt gehalten ist.

Es ist aber auch denkbar, dass der Positionierkörper an den Kugelhalsabschnitt angeformt ist, beispielsweise einstückig angeformt ist, zum Beispiel als Materialanhäufung oder Verdickung.

Hinsichtlich der Ausbildung des Positionierkörpers ist erfindungsgemäß vorgesehen, dass der Positionierkörper mindestens eine Positionierfläche trägt, über welche eine Positionierung der Lastenträgerhalteeinrichtung erfolgen kann.

Beispielweise ist hierzu vorgesehen, dass die mindestens eine Positionierfläche außerhalb einer Projektionskontur der Kupplungskugel liegt, welche durch Projektion der Kupplungskugel auf den Positionierkörper entsteht.

Die Projektion der Kupplungskugel auf dem Positionierkörper erfolgt vorzugsweise parallel zu einer Aufsetzrichtung längs welcher die Lastenträgerhalteeinrichtung bewegbar ist, um diese auf die Kupplungskugel und den Kugelhals aufzusetzen.

Insbesondere verläuft die Aufsetzrichtung ungefähr parallel zu einer Kugelmittelachse der Kupplungskugel, wobei unter einen ungefähr parallelen Verlauf der Aufsetzrichtung zur Kugelmittelachse zu verstehen ist, dass der Winkel zwischen der Kugelmittelachse und der Aufsetzrichtung gleich oder kleiner als 20°, vorzugsweise gleich oder kleiner als 20°, noch besser gleich oder kleiner als 10° ist, wobei eine einfach konzipierbare Lösung einen parallelen Verlauf vorsieht.

Erfindungsgemäß ist vorgesehen, dass die Aufsetzrichtung parallel einer Längsmittelebene des Kugelhalses und/oder parallel zur einer Querebene verläuft, die senkrecht zu einer Längsmittelebene des Kugelhalses ausgerichtet ist.

Das heißt, dass die Positionierfläche jeweils in einem derartigen Abstand von dem Kugelhals oder dem Kugelhalsabschnitt angeordnet ist, dass sie außerhalb der Projektionskontur der Kupplungskugel auf dem Positionierkörper liegt und somit in einfacher Weise zur Positionierung der Lastenträgerhalteeinrichtung zur Verfügung steht, wenn die Lastenträgerhalteeinrichtung auf die Kupplungskugel aufgesetzt wird, das heißt, die Kupplungskugel übergreift oder umgreift, um sich an der Kupplungskugel abzustützen.

Insbesondere besteht damit die einfache Möglichkeit, die Lastenträgerhalteeinrichtung derart auszubilden, dass eine Kugelaufnahme auf die Kupplungskugel aufgesetzt werden kann oder diese umgreift und dabei ohne Beeinträchtigung des Zugangs zu der Kugelaufnahme eine Wechselwirkung mit den Positionierflächen des Positionierkörpers möglich ist, um die Lastenträgerhalteeinrichtung an der mindestens einen Positionierfläche des Positionierkörpers abzustützen.

Hinsichtlich der Ausbildung der Positionierfläche wurden im Zusammenhang mit der bisherigen Erläuterung der einzelnen Ausführungsformen keine näheren Angaben gemacht.

So sieht eine besonders günstige Lösung vor, dass die Positionierfläche mindestens einen Führungsflächenbereich aufweist, welcher parallel zu einer Aufsetzrichtung der Lastenträgerhalteeinrichtung verläuft.

Ferner wurden im Zusammenhang mit der bisherigen Erläuterung der einzelnen Ausführungsformen keine näheren Angaben zu der Anordnung der mindestens einen Positionierfläche an dem Positionierkörper gemacht.

Die erfindungsgemäße Lösung sieht ferner vor, dass die mindestens eine Positionierfläche an einer Außenseite des Positionierkörpers angeordnet ist, so dass dadurch eine einfache Wechselwirkung mit der Positionierfläche möglich ist.

Besonders günstig ist es dabei, wenn der Positionierkörper als geschlossener Körper, vorzugsweise als massiver Körper ausgebildet ist.

Im Zusammenhang mit den bisherigen Erläuterungen der einzelnen Ausführungsformen wurde davon ausgegangen, dass mindestens ein Positionierkörper an dem Kugelhalsabschnitt angeordnet ist.

Eine verbesserte Positionierung oder eine stabilere Positionierung der Lastenträgerhalteeinrichtung ist erfindungsgemäß dadurch möglich, dass an dem Kugelhalsabschnitt auf einander gegenüberliegenden Seiten desselben jeweils ein Positionierkörper angeordnet ist, so dass die Abstützung der Lastenträgerhalteeinrichtung über zwei Positionierkörper erfolgen kann.

Beispielsweise wäre es denkbar, die Positionierkörper auf einander gegenüberliegenden Seiten in einer Längsmittelebene des Kugelhalses anzuordnen.

Alternativ ist es aber auch denkbar, die Positionierkörper am Kugelhals auf einander gegenüberliegenden Seiten einer quer, insbesondere senkrecht, zur Längsmittelebene verlaufenden Querebene des Kugelhalses anzuordnen.

Insbesondere ist es günstig, wenn die Positionierkörper in einer Arbeitsstellung des Kugelhalses auf einander gegenüberliegenden Seiten einer Längsmittelebene der Anhängekupplung angeordnet sind, wobei in der Arbeitsstellung des Kugelhalses die Längsmittelebene der Anhängekupplung auch mit einer Längsmittelebene der Kraftfahrzeugkarosserie und insbesondere der Längsmittelebene des Kugelhalses zusammenfällt.

Dabei könnten die Positionierkörper ebenfalls noch in einer Richtung parallel zu der Längsmittelebene gegeneinander versetzt am Kugelhals angeordnet sein.

So sieht eine besonders günstige Lösung vor, dass die Positionierkörper in derselben Querebene liegen, welche quer, insbesondere senkrecht, zur Längsmittelebene und insbesondere ungefähr parallel zur Mittelachse der Kupplungskugel verläuft.

Besonders günstig ist eine Lösung, bei welcher die Positionierkörper spiegelsymmetrisch zur Längsmittelebene des Kugelhalses angeordnet sind und somit auf beiden Seiten der Längsmittelebene in exakt derselben relativen Position zur Kupplungskugel angeordnet sind, da die Kupplungskugel ohnehin spiegelsymmetrisch zur Längsmittelebene ausgebildet ist.

Hinsichtlich der Funktion der Positionierkörper wurden im Zusammenhang mit der bisherigen Beschreibung der einzelnen Ausführungsbeispiele keine näheren Angaben gemacht.

Eine andere vorteilhafte Lösung sieht jedoch vor, dass der mindestens eine Positionierkörper nicht nur zur definierten Ausrichtung der Lastenträgerhalteeinrichtung relativ zum Kugelhals und zur Kupplungskugel dient, sondern gleichzeitig auch die Traglast aufnimmt, so dass die Kupplungskugel in diesem Fall nicht dazu beiträgt, die Lastenträgerhalteeinrichtung zu tragen, sondern im Zusammenwirken mit der Lastenträgerhalteeinrichtung nur dazu, die Lastenträgerhalteeinrichtung definiert zum Kugelhals ausgerichtet zu halten.

Auch hinsichtlich der Anordnung oder des Verlaufs der mindestens einen Positionierfläche wurden bislang keine näheren Angaben gemacht.

So könnten beispielsweise die Positionierflächen eine andere Symmetrie relativ oder keine Symmetrie relativ zur Längsmittelebene aufweisen.

Eine besonders zweckmäßige Lösung sieht jedoch vor, dass die mindestens eine Positionierfläche der Positionierkörper spiegelsymmetrisch zur Längsmittelebene des Kugelhalses ausgebildet ist, so dass auch die Positionierflächen selbst eine Spiegelsymmetrie zur Längsmittelebene aufweisen.

Hinsichtlich der Ausbildung und Form des mindestens einen Positionierkörpers selbst im Einzelnen wurden bislang keine näheren Angaben gemacht.

So sieht die erfindungsgemäße Lösung vor, dass sich der mindestens eine Positionierkörper ausgehend von einem diesen tragenden Kugelhalsabschnitt in einer Erstreckungsrichtung vom Kugelhalsabschnitt weg erstreckt.

Dies ist eine einfache und zweckmäßige Gestaltung des Positionierkörpers, die eine Abstützung der Lastenträgerhalteeinrichtung an diesem erleichtert.

Beispielsweise wäre es in diesem Zusammenhang möglich, den Positionierkörper so auszubilden, dass dieser sich in derart einer Verzweigung des Kugelhalses oder in derart einer Ausformung des Kugelhalses erstreckt.

Eine besonders einfache Realisierungsform sieht vor, dass sich die Erstreckungsrichtung des Positionierkörpers quer zu dem diesen tragenden Kugelhalsabschnitt erstreckt.

Bei einem derartigen Positionierkörper wurden ferner ebenfalls noch keine Angaben über den Verlauf der Positionierfläche relativ zur Erstreckungsrichtung gemacht.

So sieht eine vorteilhafte Lösung vor, dass die mindestens eine Positionierfläche parallel zur Erstreckungsrichtung oder in einem Winkel von weniger als 20° zur Erstreckungsrichtung des Positionierkörpers verläuft.

In diesem Fall ist beispielsweise vorgesehen, dass die mindestens eine Positionierfläche ein Flächenbereich einer geometrischen Fläche ist, welche den den Positionierkörper tragenden Kugelhalsabschnitt schneidet, sich also quer zu diesem Kugelhalsabschnitt erstreckt.

Hinsichtlich der Anordnung der Positionierflächen an dem Positionierkörper sind die unterschiedlichsten Möglichkeiten denkbar.

Erfindungsgemäß ist außerdem vorgesehen, dass der mindestens eine Positionierkörper auf einander gegenüberliegenden Seiten angeordnete Positionierflächen aufweist.

Erfindungsgemäß sind dabei die auf gegenüberliegenden Seiten des Positionierkörpers angeordneten Positionierflächen so ausgebildet, dass sie auf gegenüberliegenden Seiten einer quer, insbesondere senkrecht, zur Längsmittelebene verlaufenden Querebene liegen.

Vorzugsweise sind die Positionierflächen auch so ausgebildet, dass sie spiegelsymmetrisch zu der Querebene verlaufen.

Im Zusammenhang mit der Funktion der Positionierflächen wurden bei einem vorstehend erwähnten Ausführungsbeispiel Führungsflächenbereiche beschrieben, welche parallel zur Aufsetzrichtung verlaufen sollen.

Alternativ oder ergänzend dazu ist es aber auch denkbar, dass die mindestens eine Positionierfläche mindestens einen Positionierflächenbereich aufweist, der quer zu der Aufsetzrichtung verläuft.

Ferner besteht die Möglichkeit bei derartigen, sich quer zur Aufsetzrichtung erstreckenden Positionierflächenbereichen zwei quer zur Aufsetzrichtung verlaufende Positionierflächenbereiche so anzuordnen, dass diese mit zunehmender Erstreckung in der Aufsetzrichtung mit zunehmendem Abstand oder mit abnehmendem Abstand relativ zueinander verlaufen, das heißt, dass die Positionierflächenbereiche zusammen eine keilähnliche Wirkung entfalten können, um eine exakte Positionierung an diesen zu erreichen.

Dabei können die zwei Positionierflächenbereiche konisch oder parabolisch oder hyperbolisch oder in Form von Zylinder oder Kugelflächenbereichen relativ zueinander verlaufen.

Ferner ist es zweckmäßig, wenn die Positionierflächenbereiche symmetrisch zur Aufsetzrichtung verlaufen, so dass eine zur Aufsetzrichtung symmetrische exakte Positionierung realisierbar ist.

Alternativ zu der Ausbildung des Positionierkörpers derart, dass dieser sich in einer Erstreckungsrichtung erstreckt, ist vorgesehen, dass der Positionierkörper durch einen an dem den Positionierkörper tragenden Kugelhalsabschnitt sitzenden Auflagekörper gebildet ist, wobei ein derartiger Auflagekörper durch eine auf dem Kugelhalsabschnitt angeordnete Materialauflage gebildet ist.

In einem speziellen Fall ist es beispielsweise denkbar, den Positionierkörper durch einen an dem diesen tragenden Kugelhalsabschnitt gebildeten Kragen zu realisieren.

In diesem Fall ist vorzugsweise vorgesehen, dass die mindestens eine Positionierfläche an einer dem Kugelhalsabschnitt abgewandten Außenseite des Positionierkörpers liegt.

Dabei ist beispielsweise vorgesehen, dass die mindestens eine Positionierfläche auf einer Seite der Längsmittelebene des Kugelhalses angeordnet ist.

Beispielsweise ist in diesem Fall vorgesehen, dass die mindestens eine Positionierfläche einen von einem rotationssymmetrischen Verlauf zur Mittelachse der Kupplungskugel abweichenden Verlauf hat.

Besonders einfach ist dies realisierbar, wenn die mindestens eine Positionierfläche eine Abflachung des Positionierkörpers umfasst.

Insbesondere lässt sich dies dadurch realisieren, dass die mindestens eine Positionierfläche in einer den den Positionierkörper tragenden Kugelhalsabschnitt nicht schneidenden geometrischen Fläche liegt.

Eine besonders günstige Gestaltung sieht vor, dass an dem Kugelhals zwei Positionierkörper vorgesehen sind und dass die mindestens eine Positionierfläche des einen Positionierkörpers einen Flächenabschnitt aufweist, der in einer geometrischen Ebene liegt, die mit der geometrischen Ebene, in welcher ein Flächenabschnitt der mindestens einen Positionierfläche des anderen Positionierkörpers liegt, einen Winkel von weniger als 120° miteinander einschließt.

Vorzugsweise beträgt der Winkel weniger als 100°, noch besser weniger als 90°.

Hinsichtlich der Positionierflächen selbst wurden bislang keine näheren Angaben gemacht.

Insbesondere wenn der Positionierkörper einstückig an den Kugelhals angeformt ist, ist es vorteilhaft, wenn die Positionierflächen maschinell bearbeitete Flächen sind, um deren Lage und Ausrichtung relativ zur Kupplungskugel exakt festlegen zu können.

Darüber hinaus wird die eingangs genannte Aufgabe erfindungsgemäß auch durch eine Lastenträgereinrichtung für eine einen Kugelhals und eine Kupplungskugel aufweisende Anhängekupplung, insbesondere für eine Anhängekupplung gemäß einem oder mehreren der voranstehenden beschriebenen Merkmale, erfindungsgemäß dadurch gelöst, dass die Lastenträgerhalteeinrichtung einen Gehäusekörper mit einer Kugelaufnahme für die Kupplungskugel des Kugelhalses der Anhängekupplung umfasst und dass die Lastenträgerhalteeinrichtung mindestens ein fest mit dem Gehäusekörper verbundenes Positionsaufnahmeelement umfasst, welches mit dem an dem Kugelhals angeordneten Positionierkörper zusammenwirkt.

Der Vorteil der erfindungsgemäßen Lösung ist somit darin zu sehen, dass im Gegensatz zu den bekannten Lastenträgerhalteeinrichtungen, bei welchen eine Fixierung des Gehäusekörpers an der Kupplungskugel selbst, beispielsweise durch eine Klemmvorrichtung, erfolgt, durch das Zusammenwirken des mindestens einen Positionsaufnahmeelements mit dem Positionierkörper die Möglichkeit gegeben ist, eine bessere und präzisere Ausrichtung der Lastenträgerhalteeinrichtung relativ zum Kugelhals und zur Kupplungskugel zu erreichen, wobei insbesondere das Positionsaufnahmeelement und der Positionierkörper eine definierte und zusätzliche Abstützung der Lastenträgerhalteeinrichtung an dem Kugelhals mit der Kupplungskugel zu erreichen.

Der Vorteil der erfindungsgemäßen Lösung ist dabei außerdem zu sehen, dass damit die Möglichkeit besteht einerseits in einfacher Weise und andererseits möglichst stabil die Lastenträgerhalteeinrichtung mit dem die Kupplungskugel tragenden Kugelhals zu verbinden und eine stabile und sichere Verbindung zwischen diesen herzustellen.

Insbesondere erfolgt das Zusammenwirken zwischen dem Positionsaufnahmeelement und dem Positionierkörper unter Bildung eines Formschlusses.

Insbesondere ist dabei vorgesehen, dass das Positionsaufnahmeelement mit dem Positionierkörper, insbesondere unter Bildung eines Formschlusses, derart zusammenwirkt, dass der Gehäusekörper gegen Kippbewegungen um quer, insbesondere senkrecht, zur Mittelachse der Kupplungskugel verlaufende Kippachsen relativ zum Kugelhals festgelegt ist.

Damit können durch das Positionsaufnahmeelement und den Positionierkörper alle Kippbewegungen des Gehäusekörpers eliminiert werden.

Alternativ oder ergänzend dazu ist vorgesehen, dass der Positionierkörper und das Positionsaufnahmeelement, insbesondere unter Bildung eines Formschlusses, derart zusammenwirken, dass der Gehäusekörper gegen eine Drehbewegung um eine parallel zur Mittelachse der Kupplungskugel oder mit der Mittelachse der Kupplungskugel einen Winkel von maximal 20° einschließende Drehachse drehfest festgelegt ist.

Damit besteht auch die Möglichkeit, durch das Zusammenwirken des Positionierkörpers mit dem Positionsaufnahmeelement des Gehäusekörpers in einfacher Weise gegen Drehbewegungen um die Drehachse am Kugelhals festzulegen.

Besonders günstig ist es dabei, wenn das Positionsaufnahmeelement klemmungsfrei mit dem Positionierkörper zusammenwirkt, das heißt, dass das Zusammenwirken nicht über eine Klemmverbindung geht, sondern lediglich über eine formschlüssige Wechselwirkung die Kippbewegungen um die Kippachsen und/oder die Drehbewegungen um die möglichen Drehachsen lediglich durch Formschluss eliminiert werden, ohne dass eine Klemmung zwischen den Positionsaufnahmeelement und den Positionierkörper notwendig ist.

Insbesondere ist dabei das Positionsaufnahmeelement so ausgebildet, dass diese mindestens eine Aufnahmefläche aufweist, die mit der mindestens einen Positionierfläche des mindestens einen Positionierkörpers in einer Lastenträgerhaltestellung zusammenwirkt.

Durch dieses Anlegen der Aufnahmefläche an der Positionierfläche lassen sich die formschlüssigen Fixierungen gegen Bewegungen um die Kippachse und/oder Drehungen um die Drehachse eliminieren.

Eine vorteilhafte Lösung sieht dabei vor, dass mit dem Gehäusekörper zwei Positionsaufnahmeelemente fest verbunden sind.

In diesen Fall ist vorzugsweise vorgesehen, dass beide Positionsaufnahmeelemente relativ zueinander starr angeordnet sind.

Ferner ist vorzugsweise vorgesehen, dass die beiden Positionsaufnahmeelemente relativ zum Gehäusekörper starr angeordnet sind.

Besonders günstig ist es, wenn das Positionsaufnahmeelement zwei aneinander zugewandte Aufnahmeflächen aufweist.

Prinzipiell wäre es denkbar, die Positionierkörper so auszubilden, dass sie die Lastenträgerhalteeinrichtung relativ zum Kugelhals in einer definiert ausgerichteten Stellung halten, jedoch nicht tragen, so dass beispielsweise die Lastenträgerhalteeinrichtung auf der Kupplungskugel ruht und von der Kupplungskugel getragen wird und die Positionierkörper, durch ein Tragen der Lastenträgerhalteeinrichtung seitens der Kupplungskugel nicht festgelegten Freiheitsgrade der Bewegung der Lastenträgerhalteeinrichtung relativ zur Kupplungskugel und zum Kugelhals auf eine definierte Ausrichtung der Lastenträgerhalteeinrichtung zu begrenzen.

Das Zusammenwirken des Positionierkörpers mit dem Positionsaufnahmeelement wurde im Zusammenhang mit den bisherigen Lösungen nicht näher spezifiziert.

Vorzugsweise ist vorgesehen, dass der jeweilige Positionierkörper mit seinem die Positionierfläche tragenden Bereich in einer Lastenträgerhaltestellung zwischen den Aufnahmeflächen des Positionsaufnahmeelements angeordnet ist.

Besonders vorteilhaft ist es, wenn das Positionsaufnahmeelement einander zugewandt verlaufende Aufnahmeflächen aufweist, zwischen welchen der Positionierkörper in der Lastenträgerhaltestellung angeordnet ist.

Darüber hinaus ist vorzugsweise vorgesehen, dass das Positionsaufnahmeelement zwei einander zugewandte und ungefähr parallel zur Aufsetzrichtung verlaufende Führungsflächenbereiche aufweist.

Derartige Führungsflächenbereiche ermöglichen eine drehfeste Festlegung der Lastenträgerhalteeinrichtung am Kugelhals mittels des Positionierkörpers und des Positionsaufnahmeelements.

In diesem Fall ist es beispielsweise vorgesehen, dass die Ausrichtfläche, insbesondere die Führungsflächenbereiche, in der Lastenträgerhaltestellung den jeweiligen Positionierkörper mit geringem Spiel führen.

Insbesondere ist vorgesehen, dass die Aufnahmeflächen einander zugewandte und ungefähr parallel zu der Aufsetzrichtung verlaufende Führungsflächenbereiche aufweisen.

Vorzugsweise ist vorgesehen, dass die Aufnahmeflächen, insbesondere die Führungsflächenbereiche, in der Lastenträgerhaltestellung den jeweiligen Positionierkörper mit Spiel zwischen sich aufnehmen.

Um das Positionsaufnahmeelement auch an den Positionierkörpern abstützen zu können, ist vorzugsweise vorgesehen, dass mindestens eine der Aufnahmeflächen einen quer zur Aufsetzrichtung verlaufenden Stützflächenbereich aufweist.

Ein derartiger Stützflächenbereich schafft die Möglichkeit, auch die Last von der Lastenträgerhalteeinrichtung auf den Kugelhals über den Positionierkörper zu übertragen.

Besonders günstig ist es, wenn jede der Aufnahmeflächen einen quer zu der Aufsetzrichtung verlaufenden Stützflächenbereich aufweist, insbesondere mehrere quer zur Aufsetzrichtung verlaufende Stützflächenbereiche aufweist.

Insbesondere ist es günstig, wenn die Stützflächenbereiche mit zunehmender Erstreckung in Aufsetzrichtung mit zunehmendem Abstand voneinander verlaufen, so dass die Stützflächenbereiche nicht nur dazu eingesetzt werden können, die Lastenträgerhalteeinrichtung an dem Positionierkörper abzustützen, sondern auch definiert relativ zum Positionierkörper auszurichten.

Die Stützflächenbereiche können dabei konisch oder parabolisch oder zylinderförmig oder kegelförmig zueinander verlaufen.

Eine vorteilhafte Lösung sieht vor, dass die Stützflächenbereiche bogenförmig zueinander verlaufen, zum Beispiel in Form von Parabelbögen oder Kreisbögen oder hyperbolischen Bögen.

Eine besonders günstige Lösung sieht vor, dass die Stützflächenbereiche in der Lastenträgerhaltestellung den Gehäusekörper relativ zum Positionierkörper spielarm festlegen.

Hinsichtlich der Anordnung des Stabilisierungselements und des Positionsaufnahmeelements wurden bislang keine näheren Angaben gemacht.

So sieht eine konstruktiv günstige Lösung vor, dass das mindestens eine Positionsaufnahmeelement auf einer Seite des Kugelhalses liegt, wenn die Lastenträgerhalteeinrichtung in der Lastenträgerhaltestellung an dem Kugelhals angeordnet ist.

Eine andere zweckmäßige Lösung, insbesondere eine Lösung, bei welcher die Positionierflächen im Wesentlichen Führungsflächenbereiche aufweisen, sieht vor, dass in der Lastenträgerhaltestellung die beiden Positionierkörper mit ihren Positionierflächen zwischen den Aufnahmeflächen zweier Positionsaufnahmeelemente liegen.

Bei dieser Lösung besteht somit die Möglichkeit, durch Bewegen der Lastenträgerhalteeinrichtung in der Aufsetzrichtung und Aufsetzen derselben auf den Kugelhals mit der Kupplungskugel die Aufnahmeflächen mit den Positionierflächen in Wechselwirkung zu bringen, indem der Gehäusekörper mit den Positionsaufnahmeelemente einfach auf die Kupplungskugel und den Kugelhals mit dem Positionierkörper in der Aufsetzrichtung aufgesetzt wird, ohne das hierzu weitere Bewegungen der Lastenträgerhalteeinrichtung erforderlich sind.

Besonders günstig ist diese Lösung auch dann, wenn die beiden Positionierflächen der beiden Positionierkörper und/oder die beiden Aufnahmeflächen der beiden Positionsaufnahmeelemente Flächenabschnitte, insbesondere Verkeilflächenabschnitte aufweisen, die in einer quer zur Aufsetzrichtung verlaufenden Keilrichtung sich mit zunehmender Erstreckung in der Verkeilrichtung erweiternd oder verengend verlaufen.

Damit besteht die Möglichkeit, die Positionsaufnahmeelemente relativ zu den Positionierkörpern durch eine Bewegung quer zur Aufsetzrichtung in der Verkeilrichtung aneinander zur Anlage zu bringen und miteinander zu verkeilen, um dadurch eine spielarme Positionierung der Positionsaufnahmeelemente relativ zu den Positionierkörpern am Kugelhals zu erreichen und somit insgesamt auch den Gehäusekörper spielarm oder im Wesentlichen spielfrei relativ zu dem Kugelhals mit den Positionierkörpern positionieren zu können.

Im Zusammenhang mit der bisherigen Beschreibung der Lastenträgerhalteeinrichtung wurde lediglich darauf eingegangen, wie die Lastenträgerhalteeinrichtung relativ zum Kugelhals positionierbar ist.

Es wurden jedoch keine Ausführungen zur Fixierung der Lastenträgerhalteeinrichtung an dem Kugelhals gemacht.

So sieht eine vorteilhafte Lösung vor, dass die Lastenträgerhalteeinrichtung eine den Gehäusekörper am Kugelhals festlegende Fixiereinrichtung aufweist. Eine derartige Fixiereinrichtung weist vorzugsweise ein Fixierelement auf, welches den Gehäusekörper relativ zum Kugelhals in der Lastenträgerhaltestellung fixiert.

Dabei kann das Fixierelement in unterschiedlicher Art und Weise wirksam werden.

Eine zweckmäßige Lösung sieht vor, dass das Fixierelement mit der Kupplungskugel oder dem Kugelhals derart zusammenwirkt, dass der Gehäusekörper relativ zur Kupplungskugel oder zum Kugelhals in der Aufsetzrichtung mit einer Aufsetzkraft beaufschlagt ist und sich somit nicht in entgegengesetzter Richtung zur Aufsetzrichtung vom Kugelhals wegbewegt.

Insbesondere ist dabei die Aufsetzkraft stets wirksam, solange die Lastenträgerhalteeinrichtung in der Lastenträgerhaltestellung und das Fixierelement in der Fixierstellung sind.

Eine weitere vorteilhafte Lösung sieht vor, dass das Fixierelement mit der Kupplungskugel oder dem Kugelhals derart zusammenwirkt, dass der Gehäusekörper relativ zur Kupplungskugel oder zum Kugelhals eine quer zur Aufsetzrichtung wirkende Verspannkraft erfährt, und ein Spiel zwischen der Kupplungskugelaufnahme und der Kupplungskugel und/oder zwischen dem Positionierkörper und dem Positionsaufnahmeelement reduziert oder entfernt.

Insbesondere ist dabei die Verspannkraft stets wirksam, solange die Lastenträgerhalteeinrichtung in der Lastenträgerhaltestellung und das Fixierelement in der Fixierstellung sind.

Vorzugsweise ist vorgesehen, dass das Fixierelement mit der Kupplungskugel oder dem Kugelhals derart zusammenwirkt, dass der Gehäusekörper relativ zur Kupplungskugel oder zum Kugelhals eine quer zur Aufsetzrichtung gerichtete Verspannkraft erfährt.

Die Erzeugung der Aufsetzrichtung und/oder der Verspannkraft erfolgt insbesondere durch ein Zusammenwirken des Fixierelements mit einer schräg oder gewölbt zur Aufsetzrichtung verlaufenden Fläche an der Kupplungskugel oder m Kugelhals, wobei die Fläche direkt am Kugelhals oder an einem auf dem Kugelhals sitzenden Körper, beispielsweise dem Positionierkörper angeordnet sein kann.

Eine erste vorteilhafte Lösung sieht dabei vor, dass das Fixierelement in einer Fixierstellung an dem Positionierkörper angreift und somit die Fixierung der Lastenträgerhalteeinrichtung am Kugelhals ebenfalls über den Positionierkörper erfolgt.

Insbesondere lässt sich dies dadurch realisieren, dass das Fixierelement den mindestens einen Positionierkörper auf einer in Aufsetzrichtung vorderen Seite hintergreift und somit in der Lage ist, dadurch die Lastenträgerhalteeinrichtung in Richtung der Aufsetzrichtung zu beaufschlagen.

Im einfachsten Fall ist dabei das Fixierelement als den mindestens einen Positionierkörper hintergreifender Haken ausgebildet.

Um das Fixierelement einerseits vom Positionierkörper lösen zu können und andererseits aber auch die in Aufsetzrichtung wirkende Kraft auf die Lastenträgerhalteeinrichtung ausüben zu können, ist vorzugsweise vorgesehen, dass das Fixierelement zwischen einer Lösestellung und einer Fixierstellung bewegbar an dem Gehäusekörper gehalten ist.

Dies ist durch unterschiedliche Maßnahmen realisierbar.

Eine vorteilhafte Lösung sieht vor, dass das Fixierelement mit einer Kniehebelanordnung gekoppelt ist, welche die Möglichkeit eröffnet, in der Fixierstellung mit dem Fixierelement auf den Positionierkörper einzuwirken oder auch in der Lösestellung das Fixierelement von dem Positionierkörper zu lösen.

Insbesondere lässt sich eine derartige Kniehebelanordnung vorteilhaft dann einsetzen, wenn die Kniehebelanordnung in der Fixierstellung in einer Übertotpunktstellung steht und dabei das Fixierelement in seiner Fixierstellung steht und den Positionierkörper hintergreift.

Es ist aber auch denkbar, dass das Fixierelement an einer anderen Stelle am Kugelhals mit der Kupplungskugel angreift, beispielsweise an einer eigens dafür vorgesehenen Nase oder Vertiefung am Kugelhals.

Eine vorteilhafte Lösung sieht vor, dass das Fixierelement in einer Fixierstellung am Kugelhals oder an der Kupplungskugel angreift.

Dies ist insbesondere dadurch realisierbar, dass das Fixierelement eine Hinterschneidung am Kugelhals hintergreift oder in eine Vertiefung am Kugelhals eingreift oder die Kupplungskugel auf einer in Aufsetzrichtung vorderen, das heißt bei vertikaler Aufsetzrichtung von oben nach unten auf einer unteren Seite, hintergreift.

Ein derartiges Angreifen am Kugelhals oder an der Kupplungskugel in der Fixierstellung lässt sich insbesondere dadurch realisieren, dass das Fixierelement in der Fixierstellung in eine Kugelaufnahme des Gehäusekörpers hineinragt.

Um das Fixierelement zwischen einer Fixierstellung und einer Lösestellung bewegen zu können, ist vorzugsweise vorgesehen, dass das Fixierelement in einem Führungskanal zwischen der Fixierstellung und der Lösestellung bewegbar geführt ist.

Der Führungskanal ist bei einer besonders einfachen Lösung als Führungsbohrung des Gehäusekörpers realisiert.

Der Führungskanal verläuft dabei vorzugsweise quer zur Kugelaufnahme des Gehäusekörpers, so dass das Fixierelement in einfacher Weise in der Fixierstellung in die Kugelaufnahme des Gehäusekörpers hineinragen oder aus dieser in der Lösestellung zurückgezogen positioniert werden kann.

Um das Fixierelement in seiner Fixierstellung zu halten, ist vorzugsweise eine Betätigungseinrichtung vorgesehen, durch welche das Fixierelement in der Fixierstellung beaufschlagbar ist.

Dabei umfasst die Betätigungseinrichtung vorzugsweise ein Keilgetriebe, welches auf das Fixierelement wirkt.

Eine besonders günstige Lösung sieht vor, dass die Betätigungseinrichtung ein federbeaufschlagtes Keilgetriebe umfasst, mit welchem das Fixierelement in der Fixierstellung beaufschlagbar ist.

Eine Realisierung eines derartigen federbeaufschlagten Keilgetriebes sieht beispielsweise vor, dass dieses einen Keilkörper mit einer auf das Fixierelement wirkenden Keilfläche aufweist und ein auf den Keilkörper wirkendes federelastisches Element.

Vorzugsweise das federbeaufschlagte Keilgetriebe aber auch so ausgebildet, dass dieses auch in der Lösestellung federbeaufschlagt ist, so dass das Bewegen des Keilkörpers von der Fixierstellung in die Lösestellung gegen die Kraftwirkung des federelastischen Elements des Keilgetriebes zu erfolgen hat.

Vorzugsweise ist dabei der Keilkörper in einer Keilkörperführung geführt.

Die Keilkörperführung könnte als separates Bauteil an dem Gehäusekörper angeordnet sein.

Eine besonders zweckmäßige, insbesondere aufgrund der Einfachheit und der Robustheit bevorzugte Lösung sieht dabei vor, dass die Keilkörperführung in den Gehäusekörper integriert ist.

Um ein derartiges Fixierelement von der Fixierstellung in die Lösestellung bewegen zu können, ist vorzugsweise vorgesehen, dass die Betätigungseinrichtung ein Löseelement aufweist, mit welchem auf die Betätigungseinrichtung eingewirkt werden kann.

Eine Möglichkeit besteht darin, dass das Löseelement auf das Fixierelement wirkt.

Insbesondere bei Verwendung eines Keilgetriebes ist es jedoch von Vorteil, wenn das Löseelement auf das Keilgetriebe wirkt und dieses in eine Lösestellung bewegt, wobei insbesondere ein Einwirken auf den Keilkörper desselben erfolgt.

Somit sind die mit dem Löseelement aufzubringenden Kräfte geringer, als wenn eine direkte Einwirkung auf das Fixierelement erfolgen würde.

Mit einem derartigen Löseelement ist somit das Keilgetriebe von seiner Fixierstellung in die Lösestellung bewegbar.

In diesem Fall ist vorzugsweise vorgesehen, dass in der Lösestellung des Keilgetriebes das Fixierelement zwischen der Fixierstellung und der Lösestellung frei beweglich ist und somit lässt sich bei einem Abnehmen der Lastenträgerhalteeinrichtung von dem Kugelhals und der Kupplungskugel das Fixierelement durch das Herausbewegen der Kupplungskugel aus der Kugelaufnahme von der Fixierstellung in die Lösestellung verschieben.

Um beim Lösen der Fixiereinrichtung und Abnehmen der Lastenträgerhalteeinrichtung von dem Kugelhals ein Übergehen des Fixierelements in die Fixierstellung vor einem erneuten Aufsetzen der Lastenträgerhalteeinrichtung auf den Kugelhals und die Kupplungskugel zu verhindern, ist der Betätigungseinrichtung vorzugsweise eine Lösestellungssicherung zugeordnet, welche sicherstellt, dass in der Lösestellung bei abgenommener Lastenträgerhalteeinrichtung die Betätigungseinrichtung in der Lösestellung verbleibt.

Insbesondere ist vorgesehen, dass das Löseelement in der Lösestellung blockierend einwirkt.

Eine derartige Lösestellungssicherung lässt sich beispielsweise durch einen auf das Löseelement wirkenden und dieses in der Lösestellung haltenden Sicherungsschieber realisieren, welcher das Löseelement in der Lösestellung hält.

Alternativ dazu sieht eine vorteilhafte Ausführungsform vor, dass die Lösestellungssicherung in der Lösestellung der Betätigungseinrichtung auf das Keilgetriebe einwirkt, um dieses in der Lösestellung fixiert zu halten, so dass sich das Fixierelement frei zwischen der Fixierstellung und der Lösestellung bewegen kann.

Eine besonders einfache Lösung sieht vor, dass die Lösestellungssicherung auf den Keilkörper einwirkt, um diesen in der Lösestellung zu halten.

Um andererseits wiederum eine selbststätige Verriegelung der Lastenträgerhalteeinrichtung nach einem erneuten Aufsetzen der Lastenträgerhalteeinrichtung auf den Kugelhals mit der Kupplungskugel zu erreichen, ist vorzugsweise vorgesehen, dass die Lösestellungssicherung mit einer Entsicherungseinrichtung versehen ist, welche, wenn sie wirksam ist, die Sicherungsstellung der Lösestellungssicherung dann verhindert oder aufhebt, wenn bei auf dem Kugelhals mit der Kupplungskugel aufsitzender Lastenträgerhalteeinrichtung der Kugelhals und die Kupplungskugel in der Kugelaufnahme in der Lastenträgerhaltestellung stehen.

Aus diesem Grund ist beispielsweise ein Tastelement vorgesehen, welches die Position der Kupplungskugel in der Kugelaufnahme durch mechanisches Abtasten derselben erfasst.

Das Tastelement kann aber auch so ausgebildet, dass es die Position eines Abschnitts des Kugelhalses oder eines am Kugelhals vorgesehenen Elements erfasst.

Hinsichtlich der Funktion der Lösestellungssicherung wurde bislang nur darauf eingegangen, dass diese in der Lage ist, in die Sicherungsstellung überzugehen.

Besonders günstig ist es jedoch, wenn die Lösestellungssicherung selbsttätig in die Sicherungsstellung übergeht, wenn die Betätigungseinrichtung durch Betätigungen des Löseelements in die Lösestellung übergeht und die Kupplungskugel und der Kugelhals relativ zur Kugelaufnahme nicht mehr in der Lastenträgerhaltestellung stehen, wobei nur dann, wenn Kupplungskugel und Kugelhals nicht mehr in der Lastenträgerhaltestellung stehen, die Entsicherungseinrichtung unwirksam ist und das Übergehen der Lösestellungssicherung in die Sicherungsstellung erlaubt.

Dies hat den Vorteil, dass keinerlei Einwirkung auf die Lösestellungssicherung erforderlich ist, sondern diese stets dann selbst eigenständig in die Sicherungsstellung übergeht, wenn dies von der Entsicherungseinrichtung zugelassen wird.

Beispielsweise lässt sich damit in einfacher Weise die Lastenträgerhalteeinrichtung von dem Kugelhals mit der Kupplungskugel abheben, indem lediglich eine Einwirkung auf das Löseelement erfolgt, um die Betätigungseinrichtung in die Lösestellung zu bewegen, so dass dann selbsttätig die Lösestellungssicherung aktiv wird, wenn die Lastenträgerhalteeinrichtung die Lastenträgerhaltestellung verlassen hat.

Um das Abheben der erfindungsgemäßen Lastenträgerhalteeinrichtung von dem Kugelhals zu vereinfachen, ist vorzugsweise vorgesehen, dass das Löseelement der Betätigungseinrichtung derart an der Lastenträgerhalteeinrichtung angeordnet ist, dass eine zum Überführen des Löseelements in seine Lösestellung wirkende Kraft in einer Richtung entgegengesetzt zur Aufsetzrichtung auf die Lastenträgerhalteeinrichtung wirkt.

Das heißt, dass die Kraftwirkung, die auf das Löseelement aufgebracht wird, um dieses in der Lösestellung zu bewegen, gleichzeitig auch dazu eingesetzt werden kann, die Lastenträgerhalteeinrichtung von dem Kugelhals mit der Kupplungskugel abzuheben und somit von dem Kugelhals mit der Kupplungskugel zu lösen.

Dadurch ist eine vereinfachte Bedienung der Lastenträgerhalteeinrichtung beim Abheben möglich.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine Seitenansicht eines Kraftfahrzeugs, insbesondere eines Personenkraftfahrzeugs mit einer in Arbeitsstellung stehenden Anhängekupplung und einer an der Anhängekupplung gehaltenen Lastenträgereinheit;
- Fig. 2: eine Ansicht ähnlich Fig. 1 mit einem vergrößert dargestellten Teil eins Kugelhalses der Anhängekupplung und einer an der Anhängekupplung fixierten Lastenträgerhalteeinrichtung in der Fixierstellung;
- Fig. 3: eine Draufsicht in Richtung eines Pfeils A in Fig. 1 auf den Kugelhals ohne dass auf den Kugelhals eine Lastenträgerhalteeinrichtung aufgesetzt ist;
- Fig. 4: eine teilweise aufgebrochene Darstellung der Lastenträgerhalteeinrichtung, aufgesetzt auf den Kugelhals der Anhängekupplung;
- Fig. 5: eine Darstellung ähnlich Fig. 2 der Lastenträgerhalteeinrichtung in einer Lösestellung;
- Fig. 6: eine Darstellung ähnlich Fig. 2 eines zweiten Ausführungsbeispiels einer erfindungsgemäßen Lastenträgerhalteeinrichtung in einer Fixierstellung;
- Fig. 7: einen Schnitt längs Linie 7-7 in Fig. 6;
- Fig. 8: eine Darstellung der Lastenträgerhalteeinrichtung gemäß Fig. 6 in einer Lösestellung kurz vor einem Abheben der Lastenträgerhalteeinrichtung von dem Kugelhals mit der Kupplungskugel;
- Fig. 9: einen Schnitt längs Linie 9-9 in Fig. 8;
- Fig. 10: eine Darstellung ähnlich Fig. 6 eines dritten Ausführungsbeispiels einer erfindungsgemäßen Lastenträgerhalteeinrichtung in der Lastenträgerhaltestellung und der Fixierstellung;
- Fig. 11: einen Schnitt längs Linie 11-11 in Fig. 12;
- Fig. 12: einen Schnitt längs Linie 12-12 in Fig. 11;
- Fig. 13: eine Darstellung ähnlich Fig. 10 der Lastenträgerhalteeinrichtung in der Lösestellung;
- Fig. 14: einen Schnitt ähnlich Fig. 11 nach Verlassen der Lastenträgerhaltestellung durch die Lastenträgerhalteeinrichtung;
- Fig. 15: einen Schnitt ähnlich Fig. 12 nach Verlassen der Lastenträgerhaltestellung durch die Lastenträgerhalteeinrichtung;
- Fig. 16: einen Schnitt ähnlich Fig. 10 durch ein viertes Ausführungsbeispiel einer erfindungsgemäßen Lastenträgerhalteeinrichtung und
- Fig. 17: einen Schnitt ähnlich Fig. 10 durch ein fünftes Ausführungsbeispiel einer erfindungsgemäßen Lastenträgerhalteeinrichtung;
- Fig. 18: einen Schnitt ähnlich Fig. 10 durch ein nicht den Ansprüchen unterfallendes sechstes Ausführungsbeispiel einer erfindungsgemäßen Lastenträgerhalteeinrichtung;
- Fig. 19: einen Schnitt längs Linie 19-19 in Fig. 18;
- Fig. 20: einen Schnitt ähnlich Fig. 10 durch ein nicht den Ansprüchen unterfallendes siebtes Ausführungsbeispiel einer erfindungsgemäßen Lastenträgerhalteeinrichtung und
- Fig. 21: einen Schnitt ähnlich Fig. 10 durch ein nicht den Ansprüchen unterfallendes achtes Ausführungsbeispiel einer erfindungsgemäßen Lastenträgerhalteeinrichtung.

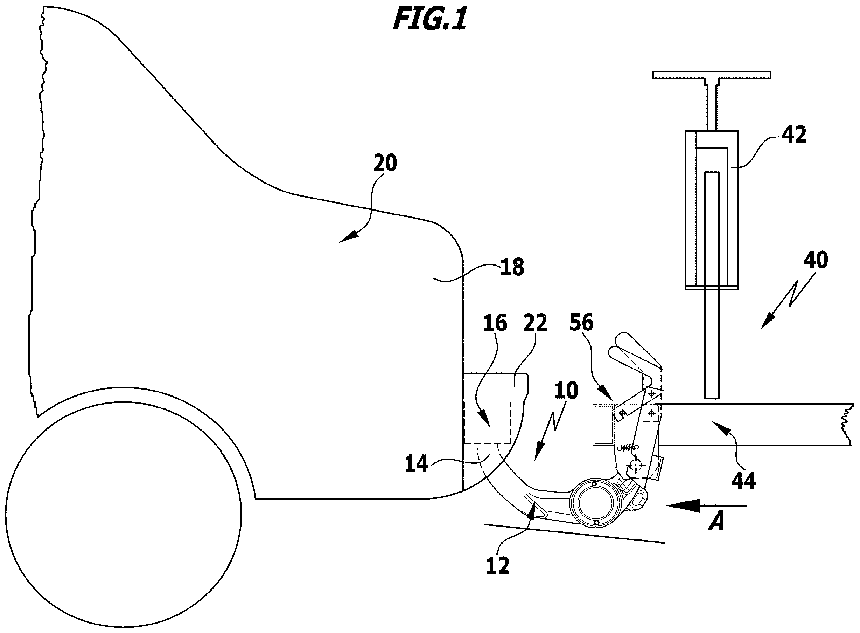

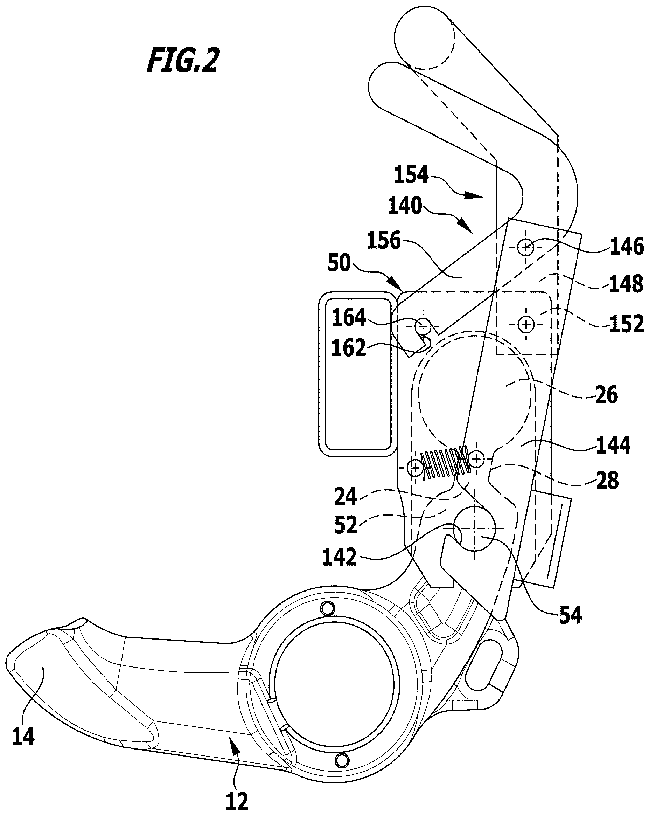

Ein in Fig. 1 und 2 dargestelltes Ausführungsbeispiel einer als Ganzes mit 10 bezeichneten Anhängekupplung umfasst einen Kugelhals 12, welcher an einem ersten Ende 14 mit einem Kugelhalsträger 16 verbunden ist, welcher seinerseits fest an einer Heckpartie 18 einer als Ganzes mit 20 bezeichneten Kraftfahrzeugkarosserie eines Kraftfahrzeugs gehalten ist, wobei der Kugelhalsträger 16 vorzugsweise verdeckt durch eine hintere Stoßfängereinheit 22 fest mit der Heckpartie 18 verbunden ist.

Der Kugelhalsträger 16 kann beispielsweise einen üblichen sich unter der Stoßfängereinheit 22 und parallel zu dieser sowie quer zu einer Längsrichtung der Kraftfahrzeugkarosserie 20 erstreckenden Querträger umfassen, welcher seinerseits mit der Heckpartie 18 verbunden ist, und außerdem entweder eine Aufnahme, an welcher Kugelhals 12 mit dem Ende 14 fest oder lösbar gehalten ist, oder ein Schwenklager, mit welchem der Kugelhals 12 um eine oder mehrere Achsen relativ zu der Heckpartie 18 zwischen einer Arbeitsstellung, dargestellt in Fig. 1 und 2, und einer nicht dargestellten Ruhestellung verschwenkbar ist, wobei der Kugelhals 12 sich in der Ruhestellung ungefähr parallel zur Stoßfängereinheit 22 erstreckt und von der hinteren Stoßfängereinheit 22 weitgehend verdeckt angeordnet ist.

Wie in Fig. 2 dargestellt, ist der Kugelhals 12 an seinem dem ersten Ende 14 gegenüberliegenden zweiten Ende 24 abgekröpft, so dass das Ende 24 sich in der Arbeitsstellung von einer Fahrbahn weg erstreckt, und trägt eine als Ganzes mit 26 bezeichnete Kupplungskugel, wobei erfindungsgemäß zwischen der Kupplungskugel 26 und dem Ende 24 eine als Kugelansatz 28 bezeichnete Einschnürung vorgesehen ist, welche sich an das Ende 24 in Fortsetzung eines Verlaufs des Kugelhalses anschließt und über welche die Kupplungskugel 26 mit dem zweiten Ende 24 des Kugelhalses 12 verbunden ist.

Die Kupplungskugel 26 dient dabei üblicherweise zum Anhängen eines Anhängers, wobei ein Anhänger eine Zugkugelkupplung aufweist, welche die Kupplungskugel 24 übergreifend mit dem Kugelhals 12 verbindbar ist.

In seiner Arbeitsstellung, dargestellt in Fig. 1, 2 und 3, ist der Kugelhals 12 symmetrisch zu einer Längsmittelebene 30 ausgebildet, in gleicher Weise wie auch die Kupplungskugel 26, wobei die Längsmittelebene 30 nicht nur die Längsmittelebene 30 des Kugelhalses 12 und der Anhängekupplung 10 ist, sondern in der Arbeitsstellung der Anhängekupplung auch mit der vertikalen Längsmittelebene 30 der Heckpartie 18 und der Kraftfahrzeugkarosserie 20 zusammenfällt.

Dabei liegt insbesondere eine Mittelachse 32 der Kupplungskugel 26 in der Längsmittelebene 30, wobei die Mittelachse 32 der Kupplungskugel 26 dadurch festgelegt ist, dass sie gleichzeitig eine Mittelachse 32 des Kugelansatzes 28 darstellt und/oder außerdem dadurch festgelegt ist, dass sie mittig und senkrecht zu einer Abflachung 34 der Kupplungskugel 26 verläuft, welche an der Kupplungskugel 26 auf einer dem Kugelansatz 28 gegenüberliegenden Seite vorgesehen ist, so dass die Form der Kupplungskugel 26 einerseits im Bereich des Kugelansatzes 28 und andererseits im Bereich der Abflachung 34 von einer um einen auf der Mittelachse 32 liegenden Kugelmittelpunkt 36 verlaufenden vollständigen Kugelfläche 38 abweicht.

Wie in Fig. 1 und 2 dargestellt, kann die Anhängekupplung 10 nicht nur dazu dienen, einen Anhänger mit der Kraftfahrzeugkarosserie 20 zu verbinden, sondern auch dazu, einen als Ganzes mit 40 bezeichneten Lastenträger an der Kraftfahrzeugkarosserie 20 zu fixieren.

Der Lastenträger 40 dient dabei beispielsweise dazu, Fahrräder 42 zu transportieren, es ist aber auch denkbar, mit dem Lastenträger 40 andere Lasten beliebiger Art zu transportieren.

Der Lastenträger 40 umfasst eine Lastenträgerbasis 44, beispielsweise ausgebildet in Form eines Grundrahmens zur Aufnahme der verschiedenen Lasten, welcher mit einer Lastenträgerhalteeinrichtung 50 versehen ist, mit welcher der Lastenträger 40 an dem Kugelhals 12 festlegbar ist.

Wie in den Fig. 2 bis 4 dargestellt, ist der Kugelhals 12 in einem unmittelbar an das Ende 24 und dem Kugelansatz 28 angrenzenden Kugelhalsabschnitt 52 mit über diesen seitlich überstehenden Positionierkörpern 54a und 54b versehen, welche beispielsweise durch an den Kugelhalsabschnitt 52 angeformte und seitlich über den Kugelhals 52 überstehende massive Zapfen 56a, 56b, insbesondere mit einer zylindrischen Mantelfläche, ausgebildet sind.

Dabei sind die massiven Zapfen 56a und 56b symmetrisch zu der Längsmittelebene 30, angeordnet und erstrecken sich ausgehend von dem Kugelhalsabschnitt auch symmetrisch zu der Längsmittelebene 30.

Alternativ zum Anformen der Positionierkörper 54 an den Kugelhalsabschnitts 52 besteht aber auch die Möglichkeit, die Positionierkörper 54 durch einen den Kugelhalsabschnitt 52 in einer Bohrung durchsetzenden Stift, beispielsweise mit einer zylindrischen Mantelfläche, zu realisieren, welcher mit seinen beiden Enden dann die Zapfen 56a, b bildet.

Vorzugsweise sind die Positionierkörper 54, insbesondere die Zapfen 56, so ausgebildet, dass die Form der Positionierkörper 54a und 54b jeweils spiegelsymmetrisch zur Längsmittelebene 30 gestaltet ist.

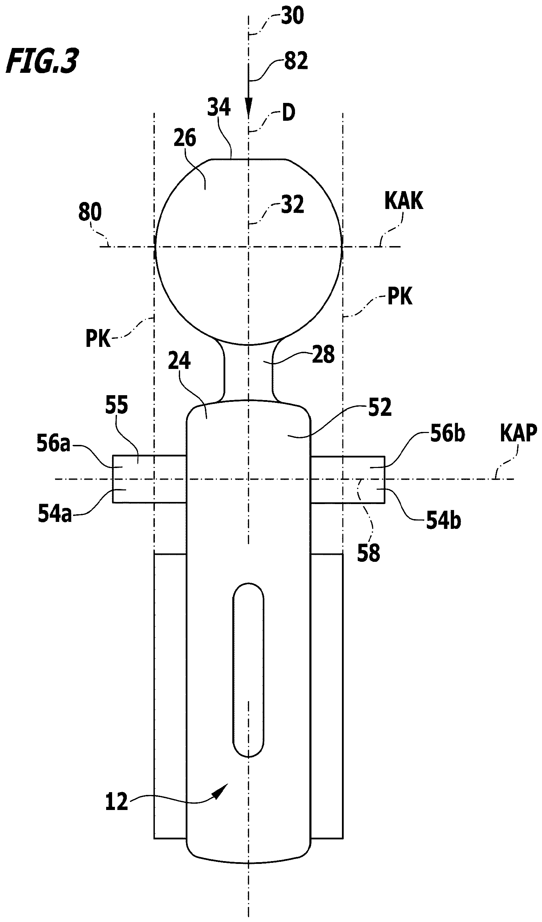

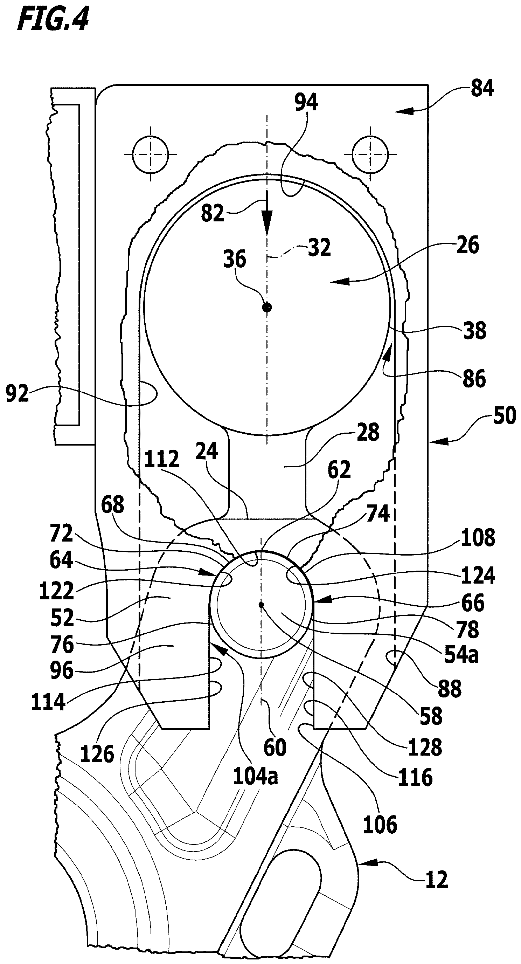

Wie insbesondere in Fig. 3 und 4 dargestellt, erstrecken sich die Positionierkörper 54a und 54b mit ihrer Längsachse 58 in einer Erstreckungsrichtung 59, die quer, vorzugsweise senkrecht, zur Längsmittelebene 30 verläuft.

Die Längsachse 58 liegt beispielsweise in einer sich quer, vorzugsweise senkrecht zur Längsmittelebene 30 erstreckenden Querebene 60, die sich außerdem parallel zur Mittelachse 32 der Kupplungskugel 26 verläuft, insbesondere durch die Mittelachse 32 der Kupplungskugel 26 hindurch verläuft.

Die Positionierkörper 54 umfassen beiderseits auf einer Außenseite 55 derselben liegende Positionierflächen 64, 66, die parallel zur Längsachse 58 und zur Erstreckungsrichtung 59 verlaufen.

Insbesondere erstrecken sich die Positionierflächen 64, 66 ausgehend von einer auf der Außenseite liegenden und der Kupplungskugel 26 zugewandten Scheitellinie 62.

Die Scheitellinie 62 liegt dabei insbesondere in der Querebene 60, welche einerseits durch die Kupplungskugel 26 verläuft und andererseits die Positionierkörper 54a und 54b insbesondere mittig schneidet, wie in Fig. 3 und 4 dargestellt.

Auf gegenüberliegenden Seiten der Querebene 60 liegen die Positionierflächen 64 und 66 der Positionierkörper 54a und 54b, die sich vorzugsweise parallel oder ein einem Winkel von bis zu 20° zu der Längsachse 58 der Positionierkörper 54a, 54b erstrecken, wobei die Positionierflächen 64 und 66 Teilflächen einer als Ganzes mit 68 bezeichneten geometrischen Außenmantelfläche der Positionierkörper 54a und 54b sind, welche den Kugelhalsabschnitt 52 schneidet.

Im Fall der Ausbildung der Positionierkörper 54a und 54b in Form zylindrischer Zapfen stellt die Außenmantelfläche 68 der Positionierkörper 54a und 54b eine Zylindermantelfläche dar, wobei die Längsachse 58 eine Zylinderachse zu dieser Zylindermantelfläche bildet.

Die Positionierflächen 64 und 66 erstrecken dabei beiderseits vorzugsweise in zunehmendem Abstand von der Querebene 60, wobei die Positionierflächen 62 und 64 sich zunächst quer zur Querebene 60 und auch quer zur Längsmittelebene 30 und sich mit zunehmendem Abstand von der Kupplungskugel 26 auch mit zunehmendem Abstand von der Querebene 60 verlaufende Positionierflächenbereiche 72 und 74 aufweisen, die in näherungsweise parallel oder parallel zu der Querebene 60 verlaufende Führungsflächenbereiche 76, 78 der Positionierflächen 64 und 66 übergehen.

Dabei gehen die Positionierflächenbereiche 72 und 74 beispielsweise stufenlos in die Führungsflächenbereiche 76 bzw. 78 über.

Bei dem in den Fig. 2 bis 4 dargestellten erfindungsgemäßen Kugelhals 12 liegen die Positionierkörper 54a und 54b derart nahe an dem Kugelansatz 28, dass ein Abstand der Scheitellinie 62 der Positionierkörper 54a, b von dem Ende 24 des Kugelhalses 12, an welchem der Kugelansatz 28 beginnt, kleiner ist als das 1,5-fache der Ausdehnung des Kugelansatzes 28 zwischen dem zweiten Ende 24 und der Kupplungskugel 26.

Ferner ist insbesondere der Abstand der Positionierkörper 54a und 54b von einer durch den Kugelmittelpunkt 36 und senkrecht zur Mittelachse 32 verlaufenden Äquatorebene 80 der Kupplungskugel 26 kleiner als der 1,5-fache Durchmesser der Kugelfläche 38 der Kupplungskugel 26.

Insbesondere liegen die Positionierflächen 64, 66 mit den Positionierflächenbereichen 72, 74 und der Führungsflächenbereiche 76, 78 außerhalb einer Projektionskontur PK, das heißt auf einer dem Kugelhalsabschnitt 52 abgewandten Seite der Projektionskontur PK, die durch Projektion der Kupplungskugel auf den Positionierkörper 54, insbesondere dessen Außenfläche entsteht.

Dabei erfolgt die Projektion parallel zu einer Aufsetzrichtung 82, in welcher die Lastenträgerhalteeinrichtung 50 auf die Kupplungskugel 26 und dem Kugelhals 12 aufsetzbar ist.

Die Aufsetzrichtung 82 verläuft vorzugsweise ungefähr parallel zur Mittelachse 32.

Auf den vorstehend beschriebenen Kugelhals 12, welcher an dem zweiten Ende 24 die Kupplungskugel 26 und im nahe dem zweiten Ende 24 liegenden Kugelhalsabschnitt 52 die Positionierkörper 54a und 54b trägt, ist die Lastenträgerhalteeinrichtung 50 aufsetzbar, wobei das Aufsetzen der Lastenträgerhalteeinrichtung 50 in der Aufsetzrichtung 82 erfolgt, welche insbesondere parallel zur Längsmittelebene 30 und ungefähr parallel zur Mittelachse 32 verläuft.

Unter dem ungefähr parallelem Verlauf der Aufsetzrichtung 82 ist zu verstehe, dass ein maximaler Winkel zwischen der Mittelachse 32 der Kupplungskugel 26 und der Aufsetzrichtung 82 von weniger als 30° betragen soll, so dass die Aufsetzrichtung parallel und/oder schräg zur Mittelachse 32 oder auch gebogen verlaufen kann.

Die Lastenträgerhalteeinrichtung 50 weist ihrerseits einen Gehäusekörper 84 auf, in welchem eine Kugelaufnahme 86 für die Kupplungskugel 26 vorgesehen ist, wobei die Kugelaufnahme 86 ausgehend von einer Aufnahmeöffnung 88 des Gehäusekörpers 84 eine sich in den Gehäusekörper 84 hineinerstreckende zylindrische Kugelführungsfläche 92 aufweist, die der Aufnahmeöffnung 88 gegenüberliegend in eine Endfläche 94 der Kugelaufnahme 86 übergeht, welche beispielsweise als Kugelkappenfläche ausgebildet sein kann, wobei in diesem Fall die Kugelkappenfläche näherungsweise an die Kugelfläche 38 der Kupplungskugel 26 angepasst ist.

Die Endfläche 94 kann aber auch eine die Kugelführungsfläche 92 abschließende ebene Fläche sein.

Der Gehäusekörper 84 ist außerdem mit Halteelementen 96 versehen, wobei die Halteelemente 96 jeweils ein Positionsaufnahmeelement 104 aufweisen, die mit jeweils einem der Positionierkörper 54 zusammenwirkt.

Die Halteelemente 96 stellen insbesondere eine starre Verbindung mit dem Gehäusekörper 84 her, so dass das Positionsaufnahmeelement 104 sowohl relativ zum Gehäusekörper 84 als auch relativ zueinander starr angeordnet sind.

Das in Fig. 4 dargestellte Positionsaufnahmeelement 104a, welches mit dem Positionierkörper 54a zusammenwirkt, erstreckt sich beispielsweise ausgehend von einer Aufnahmeöffnung 106 bis zu einem der Aufnahmeöffnung 106 gegenüberliegenden Aufnahmegrund 108.

Das Positionsaufnahmeelement 104 umfasst sich ausgehend von der Aufnahmeöffnung 106 bis in den Aufnahmegrund 108 hinein erstreckende Aufnahmeflächen 114 und 116, welche im Bereich des Aufnahmegrunds 108 als Stützflächenbereiche 122 und 124 ausgebildet sind, die in einer Richtung entgegengesetzt zur Aufsetzrichtung 82 aufeinanderzu verlaufen und beispielsweise im Bereich einer Grundlinie 112 des Aufnahmegrunds 108 ineinander übergehen oder im Abstand voneinander enden können.

Ferner umfassen die Aufnahmeflächen 114 und 116 im Anschluss an die Stützflächenbereiche 122 und 124 bis zur Aufnahmeöffnung 106 verlaufende Führungsflächenbereiche 126 und 128, die insbesondere parallel zur Aufsetzrichtung 82 verlaufen.

Die Führungsflächenbereiche 126 und 128 dienen dabei dazu, den durch die Aufnahmeöffnung 106 in die Positionsaufnahmeelemente 104 eintretenden Positionierkörper 54 dadurch zu führen, dass sich diese an die Führungsflächenbereiche 76 und 78 der Positionierkörper 54 anlegen und so die Lastenträgerhalteeinrichtung 50 beim Aufsetzen in der Aufsetzrichtung 82 führen, während die Stützflächenbereiche 122 und 124 der Positionsaufnahmeelemente 104 so gestaltet sind, dass sich diese möglichst flächenhaft an die Positionierflächenbereiche 72 und 74 der Positionierflächen 64 und 66 der Positionierkörper 54 anlegen.

Somit sitzt bei der ersten Ausführungsvariante der erfindungsgemäß ausgebildeten Lastenträgerhalteeinrichtung 50 die gesamte Last des Lastenträgers 40 auf den Positionierkörpern 54a und 54b, nämlich dadurch, dass einerseits die Stützflächenbereiche 122 und 124 der Positionsaufnahmeelemente 104 an den Positionierflächenbereichen 72 und 74 der Positionierkörper 54 möglichst flächenhaft anliegen.

Außerdem bewirkt der sich in der Aufsetzrichtung 82 erweiternde Verlauf der Stützflächenbereiche 122 und 124 und der sich zumindest näherungsweise sich identisch in Aufsetzrichtung erweiternde Verlauf der Positionierflächenbereiche 71 und 74, dass die Positionsaufnahmeelemente 104 relativ zu den Positionierkörpern 54 eine exakte Ausrichtung quer zur Aufsetzrichtung 82 erfahren.

Andererseits dienen die Führungsflächenbereiche 126 und 128 der Positionsaufnahmeelemente 104 dazu, den Gehäusekörper 84 beim Aufsetzen in der Aufsetzrichtung 82 an dem Positionierkörper 54, insbesondere den Führungsflächenbereichen 76 und 78 desselben zu führen, so dass die Positionsaufnahmeelemente 104 mit den Stützflächenbereichen 122 und 124 an den Positionierflächenbereichen 72 und 74 der Positionierkörper 54 zur Anlage kommen.

Bei dem Aufsetzen des Gehäusekörpers 84 auf den Kugelhals 12 mit der Kupplungskugel 26 erfolgt zuerst ein Einführen der Kupplungskugel 26 durch die Aufnahmeöffnung 88 in die Kugelaufnahme 86, wobei die Kugelführungsflächen 92 an der Kugelfläche 38 der Kupplungskugel 26 mit Spiel anliegen und die Kupplungskugel 26 beim Hineinbewegen in die Kugelaufnahme 86 in Richtung der Endfläche 94 führen, so lange, bis die Positionsaufnahmeelemente 104 mit ihren Aufnahmeöffnungen 106 die Positionierkörper 54 erreichen und dann die Positionierkörper 54 in die Positionsaufnahmeelemente 104 soweit hinwegbewegt werden, bis die Stützflächenbereiche 122 und 124 der Positionsaufnahmeelemente 104 an den Positionierflächenbereichen 72 und 74 der Positionierkörper 54 anliegen, so dass die Lastenträgerhaltestellung erreicht ist.

In dieser Lastenträgerhaltestellung der Lastenträgerhalteeinrichtung 50 liegt bei der ersten Ausführungsvariante die Kupplungskugel 26 nicht an der Endfläche 94 der Kugelaufnahme 86 an, sondern steht in geringem Abstand zu dieser, so dass die gesamte Last von den Positionsaufnahmeelementen 104 auf die Positionierkörper 54 und von diesen auf den Kugelhals 12 übertragen wird, während die Kupplungskugel 26 lediglich an den Kugelführungsflächen 92 anliegt und somit eine zusätzliche Abstützung des Gehäusekörpers 84 relativ zum Kugelhals 12 gegen ein Kippen des Gehäusekörpers 84 um die Positionierkörper 54, insbesondere um eine durch die quer zur Mittelachse 32 verlaufenden Längsachsen 58 derselben gebildete Kippachse KAK, abstützt.

Außerdem verhindert das beschriebene Zusammenwirken der Positionierkörper 54 mit den Positionsaufnahmeelementen 104 ein Drehen des Gehäusekörpers 84 um eine Drehachse D, die ungefähr parallel zur Aufsetzrichtung 82 verläuft.

Dabei ist unter einem ungefähr parallelen Verlauf zur Aufsetzrichtung 82 ein Verlauf der Drehachse D zu verstehen, bei welchem die Drehachse D mit der Aufsetzrichtung einen Winkel von maximal 30° einschließt.

Alternativ ist es aber auch bei einer zweiten Ausführungsvariante denkbar, die Endfläche 94 beispielsweise als konische oder als Kugelkappenfläche auszubilden und den Gehäusekörper 84 mit den Stabilisierungselementen 96 und den Positionsaufnahmeelementen 104 so auszubilden, dass die gesamte Last des Lastenträgers 40 von der Endfläche 94, auf die Kupplungskugel 26 übertragen wird und die Positionierkörper 54 lediglich dazu dienen, den Gehäusekörper 84 gegen ein allseitiges Verkippen um die Kupplungskugel 26 durchsetzende und quer zur Mittelachse 32 verlaufende Kippachsen KAK abzustützen, wobei in diesem Fall primär die Führungsflächenbereiche 126 und 128 durch Anliegen an den Führungsflächenbereichen 76 und 78 der Positionierkörper 54 einerseits ein Kippen des Gehäusekörpers 84 um die Kupplungskugel 26 verhindern und andererseits ein Drehen des Gehäusekörpers 84 um eine Drehachse D verhindern, die ungefähr parallel zur Aufsetzrichtung 82 verläuft, während die Stützflächenbereiche 122 und 124 der Aufnahmeflächen 114 und 116 beispielsweise einseitig, das heißt auf einer Seite des Kugelhalses 12 oder einer Seite der Querebene 60, auf den entsprechenden Positionierflächenbereichen 72 und 74 der Positionierflächen 64 und 66 der Positionierkörper 54 aufliegen können, um eine zusätzliche Abstützung zu bewirken.

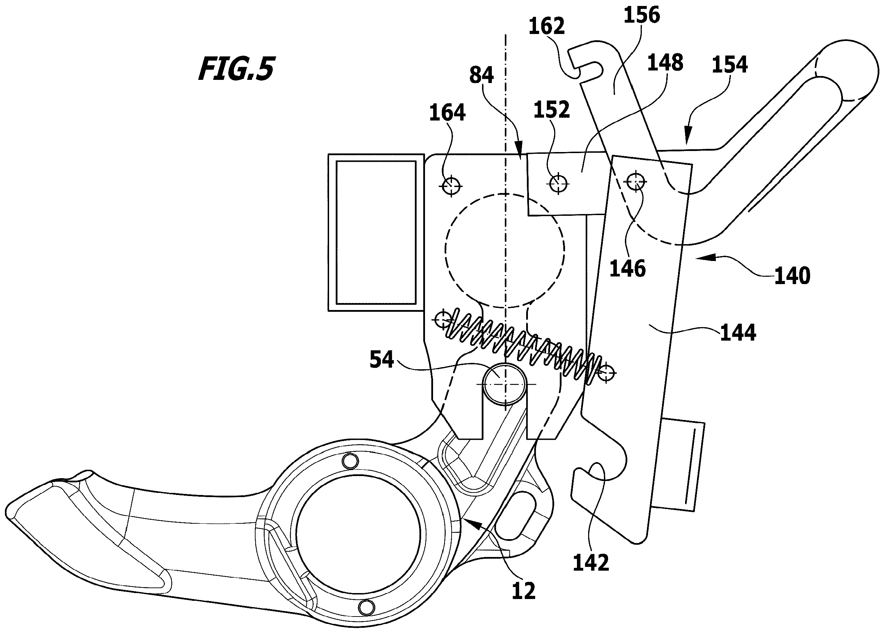

Zum Fixieren des Gehäusekörpers 84 in der Lastenträgerhaltestellung am Kugelhals 12 ist, wie in Fig. 2 und 5 dargestellt, eine als Ganzes mit 140 bezeichnete Fixiereinrichtung vorgesehen, welche beispielweise als Haken ausgebildete Fixierelemente 142 umfasst, welche in Fixierarme 144 eingeformt sind, die ihrerseits über ein Gelenk 146 mit einem weiteren Arm 148 verbunden sind, der seinerseits mittels eines Gelenks 152 an dem Gehäusekörper 84 schwenkbar gelagert ist.

Der Fixierarm 144 und der zweite Arm 148 bilden zusammen mit dem Gelenk 146 eine Kniehebelanordnung 154, welche zum Lösen der Fixierelemente von den Positionierkörpern 54 in eine in Fig. 5, dargestellte abgewinkelte Stellung bringbar ist, so dass die Fixierelemente 142 von den Positionierkörpern 54 gelöst sind, während die Kniehebelanordnung 154 von der abgewinkelten gelösten Stellung, dargestellt in Fig. 5 in eine gestreckte Übertotpunktstellung, dargestellt in Fig. 2, bringbar ist, in welcher einerseits die Fixierelemente 142 die Positionierkörper 54 hintergreifen und durch die Übertotpunktstellung die Kniehebelanordnung 154 über das Gelenk 152 derart auf den Gehäusekörper 84 einwirkt, dass dieser insgesamt in der Aufsetzrichtung 82 in Richtung der Positionierkörper 54 beaufschlagt ist, so dass schließlich die Positionsaufnahmeelemente 104 in Richtung der Positionierkörper 54 beaufschlagt sind und bei der ersten Ausführungsvariante auf diese wirken, um den Gehäusekörper 84 stabil relativ zum Kugelhals 12 festzulegen, so dass die Lastenträgerhalteeinrichtung 50 sich nicht entgegengesetzt zur Aufsetzrichtung 82 von dem Kugelhals 12 wegbewegen und somit lösen kann.

Zur Sicherung der Übertotpunktstellung der Kniehebelanordnung 154, ist am Arm 148 noch ein Sicherungshebel 156 ebenfalls mittels des Gelenks 146 schwenkbar gelagert, wobei der Sicherungshebel 156 endseitig ein erstes Sicherungselement 162, beispielsweise in Form einer Ausnehmung, aufweist, welches mit einem zweiten, am Gehäusekörper 84 angeordneten Sicherungselement 164, beispielsweise in Form eines Vorsprungs, in Eingriff bringbar ist, wie in Fig. 2 dargestellt, um die Kniehebelanordnung 154 in der gestreckten Übertotpunktstellung zu fixieren, in welcher die Fixierelemente 142 die Positionierkörper 54 hintergreifen, um die Lastenträgerhalteeinrichtung 50 in der Lastenträgerhaltestellung am Kugelhals 12 zu fixieren.

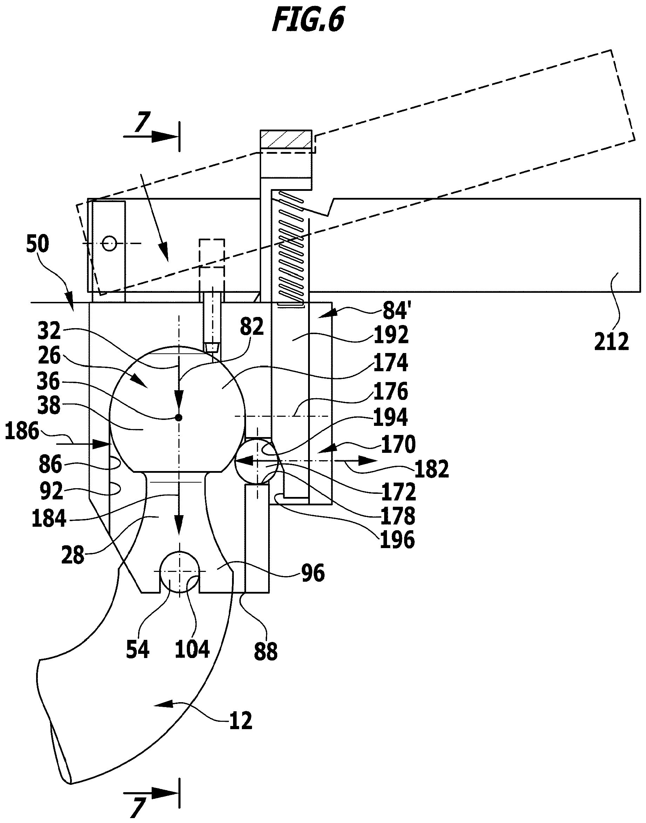

Bei einem zweiten Ausführungsbeispiel einer erfindungsgemäßen Lastenträgerhalteeinrichtung 50, dargestellt in Fig. 6 bis 9, umfasst der Gehäusekörper 84' ebenfalls die Kugelaufnahme 86 für die Kupplungskugel 26 des Kugelhalses 12, wobei die Kugelaufnahme 86 in gleicher Weise ausgebildet ist wie beim ersten Ausführungsbeispiel.

In gleicher Weise sind auch das Stabilisierungselement 96 und das Positionsaufnahmeelement 104 sowie die Positionierebene 54 ausgebildet wie beim ersten Ausführungsbeispiel, so dass hinsichtlich der Beschreibung derselben vollinhaltlich auf die Ausführungen zum ersten Ausführungsbeispiel Bezug genommen werden kann.

Insbesondere erfolgt auch, wie im Zusammenhang mit dem ersten Ausführungsbeispiel beschrieben, ein Aufsetzen des Gehäusekörpers 84 in der Aufsetzrichtung 82, um einerseits die Kupplungskugel 26 durch die Aufnahmeöffnung 88 in die Kugelaufnahme 86 hinein zu bewegen und andererseits das Positionsaufnahmeelement 104 in Eingriff mit den Positionierkörpern 54 bringen zu können, wie dies im Detail im Zusammenhang mit dem ersten Ausführungsbeispiel beschrieben wurde.

Im Gegensatz zum ersten Ausführungsbeispiel ist allerdings eine Fixiereinrichtung 170 vorgesehen, die gegenüber der Fixiereinrichtung des ersten Ausführungsbeispiels anders ausgebaut ist.

Die Fixiereinrichtung 170 umfasst ein Fixierelement 172, welches nicht auf den Positionierkörper 54 wirkt, sondern zur Fixierung der Lastenträgerhalteeinrichtung 50 auf die Kupplungskugel 26 und zwar auf einen Kugelflächenbereich 174 der Kugelfläche 38 wirkt, der zwischen einer Äquatorebene 176 der Kupplungskugel, die durch den Kugelmittelpunkt 36 und senkrecht zur Mittelachse 32 verläuft, und zwischen dem Kugelansatz 28 liegt.

Das beispielsweise als Kugel ausgebildete Fixierelement 172 ist in einer Führungsbohrung 178 des Gehäusekörpers angeordnet, die quer zur Kugelaufnahme 86, insbesondere quer zur Kugelführungsfläche 92, verläuft, so dass das Fixierelement 172 in einer Querrichtung 182 zur Aufsetzrichtung 82 und somit auch quer zur Kugelführungsfläche 92 der Kugelaufnahme 86 zwischen einer Fixierstellung, in welcher das Fixierelement 172 an der Lastenträgerhaltestellung stehenden Kupplungskugel 26 anliegt, und einer Lösestellung, in welcher das Fixierelement 172 nicht in die Kugelaufnahme 86 hineinragt, bewegbar ist.

Damit lässt sich das Fixierelement 172 in der Führungsbohrung 178 soweit in Richtung der Kupplungskugel 62 bewegen, dass diese auf dem Kugelflächenbereich 174 wirkt und dadurch die Kupplungskugel 26 in diesem Kugelflächenbereich 174 beaufschlagen kann.

Aufgrund der Wölbung des Kugelflächenbereichs 174, der zwischen der Äquatorebene 176 und dem Kugelansatz 28 liegt, führt eine Beaufschlagung der Kupplungskugel 26 durch das Fixierelement 172 dazu, dass der Gehäusekörper 84 einerseits eine Aufsetzraft 184 erfährt, die in Aufsetzrichtung 82 wirkt und somit das Positionsaufnahmeelement 104 gegen die Positionierkörper 54 des Kugelhalses drückt, wobei insbesondere der jeweilige Aufnahmegrund 108 mit den Stützflächenbereichen 122 und 124 gegen die jeweilige Positionierflächenbereiche 72 und 74 des Positionierkörpers 54 gedrückt wird.

Andererseits erzeugt die Beaufschlagung der Kupplungskugel 26 durch das Fixierelement 172 eine in der Querrichtung 182 wirkende Verspannkraft 186, die auf den Gehäusekörper 84 wirkt und ein Spiel zwischen der Kugelfläche 38 der Kupplungskugel 26 und den Kugelführungsflächen 92 reduziert oder eliminiert.

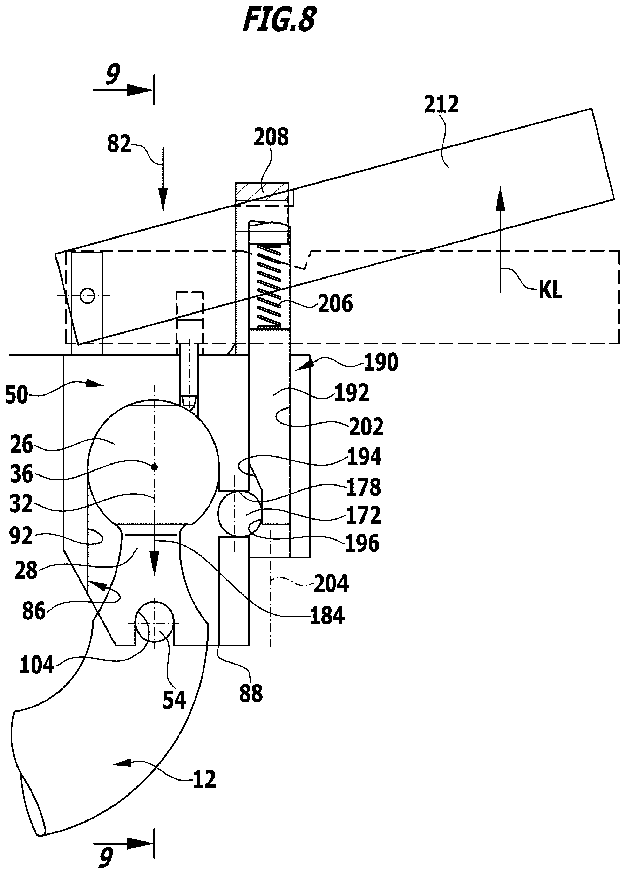

Zur Beaufschlagung des Fixierelements 172 ist eine Betätigungseinrichtung 190 mit einem Keilkörper 192 vorgesehen, welcher mit einer Keilfläche 194 auf das Fixierelement 172 in seiner Fixierstellung, dargestellt in Fig. 6, in Richtung der Kupplungskugel 26 wirkt, wobei die Keilfläche 194 in einer Rückzugsfläche 196 ausläuft, welche soweit zurückgesetzt ist, dass bei einem Verschieben des Keilkörpers 192 in eine Lösestellung, dargestellt in Fig. 8, die Rückzugsfläche 196 die Möglichkeit eröffnet, dass das Fixierelement 172 sich in der Führungsbohrung 178 sich so weit von der Kupplungskugel 26 wegbewegen und in die Lösestellung kommen kann, dass die Kupplungskugel 26 längs der Kugelführungsfläche 92 in Richtung der Aufnahmeöffnung 88 in der Kugelaufnahme 86 bewegt werden kann und somit aus der Kugelaufnahme 86 herausbewegt werden kann, um die Lastenträgerhalteeinrichtung 50 von dem Kugelhals 12 und der Kupplungskugel 26 zu lösen.

Der Keilkörper 192 ist seinerseits in einer Keilkörperführung 202 der Betätigungseinrichtung 190 geführt, die beispielsweise ebenfalls eine in dem Gehäusekörper 84 vorgesehene Ausnehmung ist, die sich beispielsweise mit einer Längsrichtung 204 parallel zur Kugelaufnahme 86 erstreckt, so dass der Keilkörper 192 ebenfalls in der Längsrichtung 204 der Keilkörperführung 202 zwischen der Fixierstellung und der Lösestellung bewegbar ist.

Um den Keilkörper 192 stets in Richtung der Fixierstellung zu beaufschlagen, ist ein federelastisches Element 206 vorgesehen, dass ständig auf den Keilkörper 192 wirkt und somit diesen in Richtung der Fixierstellung beaufschlagt.

Das federelastische Element 206 stützt sich dabei beispielsweise an einem Stützlager 208 ab, welches mit dem Gehäusekörper 84 verbunden ist.

Der Keilkörper 192, die Keilkörperführung 202 und das federelastische Element 206 bilden zusammen ein federbeaufschlagtes Keilgetriebe 210.

Um den Keilkörper 192 in die Lösestellung bewegen zu können, ist der Keilkörper 192 mit einem Löseelement 212 der Betätigungseinrichtung 190, beispielsweise einem Lösehebel, gekoppelt, welcher in einer nicht betätigten Stellung, dargestellt in Fig. 6, eine Bewegung des Keilkörpers 192 in die Fixierstellung zulässt, wobei dies aufgrund der Beaufschlagung des Keilkörpers 192 durch das federelastische Element 206 erfolgt.

Wird dagegen das Löseelement 212 betätigt, also beispielsweise der Lösehebel verschwenkt, wie in Fig. 8 dargestellt, so wirkt dieser auf den Keilkörper 192 entgegen der Kraftwirkung des federelastischen Elementes 206 um den Keilkörper 192 in die Lösestellung zu bewegen und in der Lösestellung zu halten.

In dieser Lösestellung des Keilkörpers 192 besteht somit die Möglichkeit, die Lastenträgerhalteeinrichtung 50 von dem Kugelhals 12 durch Anheben und Bewegen entgegengesetzt zur Aufsetzrichtung 82 abzuheben und somit zu lösen.

Um zu verhindern, dass beim Abheben der Lastenträgerhalteeinrichtung 50 und keiner weiteren Betätigung des Löseelements 212 der Keilkörper 192 wieder in die Fixierstellung übergeht und sich somit das Fixierelement 172 die Kugelaufnahme 86 hineinbewegt, ist eine als Ganzes mit 220 bezeichnete Lösestellungssicherung vorgesehen, welche einen Sicherungsschieber 222 aufweist, der seinerseits in einer Sicherungsstellung mit einer Schiebernase 224 in der Lage ist, das Löseelement 212 in seiner durch Betätigung erreichbaren Lösestellung zu halten.

Hierzu ist der Sicherungsschieber 222 in einer als Ganzes mit 226 bezeichneten Schieberführung geführt und quer zu dem Löseelement 212 bewegbar, so dass die Schiebernase 224 sich bei in der Lösestellung stehendem Löseelement 212 unter eine Stützfläche 228 des Löseelements 212 schieben kann, um in seiner Sicherungsstellung eine Bewegung des Löseelements 212 von der Lösestellung in die nicht betätigte Stellung zu verhindern.

Der Sicherungsschieber 222 ist dabei stets durch ein federelastisches Element 232 beaufschlagt, welches somit stets dafür sorgt, dass der Sicherungsschieber 222 dann mit seiner Schiebernase 224 sich in seiner Sicherungsstellung unter die Stützfläche 228 bewegt, wenn das Löseelement 212 in die Lösestellung bewegt wird und der Sicherungsschieber 222 sich frei bewegen kann.

Die Bewegung des Sicherungsschiebers 222 lässt sich ferner noch steuern durch eine Sicherungssteuerung 230, welche eine in dem Sicherungsschieber 222 vorgesehene Kulissenbahn 234 aufweist, die mit einem Bahnfolger 236 zusammenwirkt, wobei der Bahnfolger 236 als Kopf eines Taststifts 238 einer Abtasteinrichtung 240 zum Erfassen der Lastenträgerhaltestellung ausgebildet ist, welcher mit einer Tastspitze 242 die Position der Kupplungskugel 26 in der Kugelaufnahme 86 erfasst.

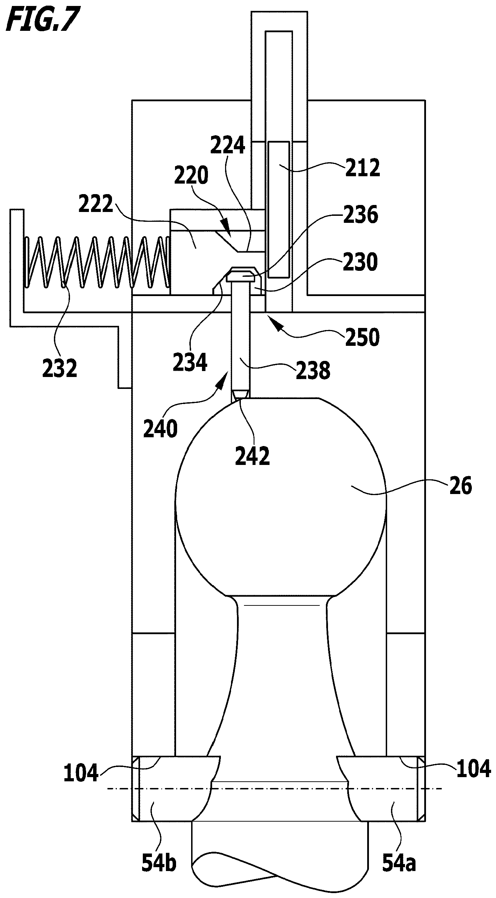

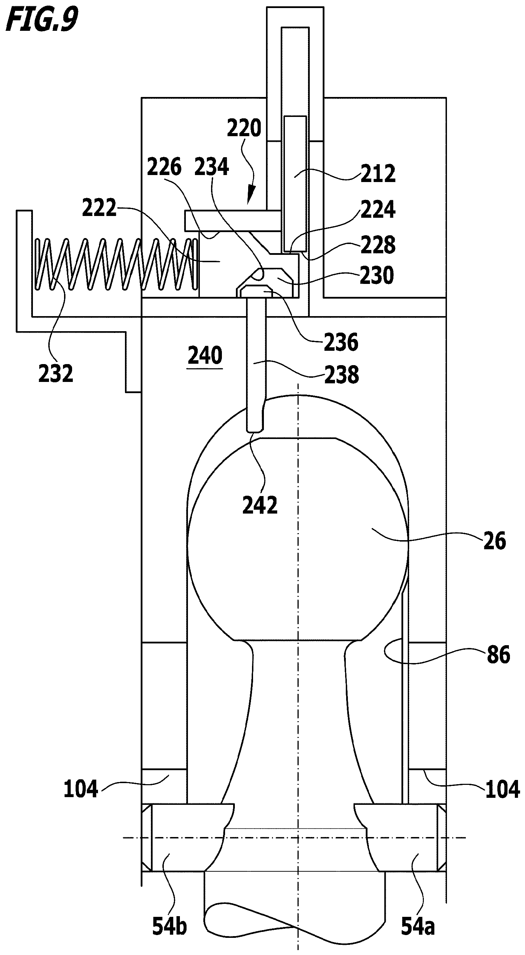

Erreicht dabei, wie in Fig. 7 dargestellt, die Kupplungskugel 26 in der Kugelaufnahme 86 des Gehäusekörpers 84 einer der Lastenträgerhaltestellung entsprechende Endstellung, so wird dies von der Abtasteinrichtung 240 erfasst, da die Kupplungskugel 26 gegen die Tastspitze 242 des Taststifts 238 drückt und den Taststift 238 in Richtung der Kulissenbahn 234 bewegt, was zur Folge hat, dass der Bahnfolger 236 mit der Kulissenbahn 234 derart zusammenwirkt, dass die Sicherungssteuerung 230 ein Verschieben des Sicherungsschiebers 222 von der in Fig. 9 dargestellten Sicherungsstellung in die Entsicherungsstellung, dargestellt in Fig. 7, bewirkt.

In dieser Entsicherungsstellung steht dann der Sicherungsschieber 222 mit der Schiebernase 224 seitlich neben der Stützfläche 228, so dass das Löseelement 212 sich von seiner betätigten Stellung frei in die unbetätigte Stellung bewegen kann.

Solange die Kupplungskugel 26 somit in ihrer Lastenträgerhaltestellung in der Kugelaufnahme 86 steht, stellt die Abtsteinrichtung 240 mit der Sicherungssteuerung 230 somit sicher, dass der Sicherungsschieber 222 in seiner nicht sichernden Stellung steht und somit die Schiebernase 224 keine Behinderung der Bewegung des Löseelements 212 bewirken kann.

Erst wenn ein Anheben der Lastenträgereinrichtung 50 in Richtung entgegengesetzt zur Aufsetzrichtung 82 erfolgt, wird dies von der Abtasteinrichtung 240 erkannt und der Sicherungssteuerung 230 vermittelt, so dass der Sicherungsschieber 222 freigegeben wird und sich in die Sicherungsstellung bewegen kann.

Dies erfolgt insbesondere dadurch, dass der Taststift 238 mit dem Bahnfolger die Bewegung des Sicherungsschiebers 222 freigibt, so dass das federelastische Element 232 den Sicherungsschieber 222 in die Sicherungsstellung, dargestellt in Fig. 9, bewegen kann, in welcher dann die Schiebernase 224 mit der Stützfläche 228 zusammenwirkt, um in der betätigten Stellung stehende Löseelement in der betätigten Stellung zu halten und damit zwangsläufig auch den Keilkörper 192 in seiner Lösestellung zu halten.

Der Vorteil der Fixiereinrichtung 170 kombiniert mit der Lösestellungssicherung 220, der Sicherungssteuerung 230 und der Abtasteinrichtung 240 ist der, dass diese die Möglichkeit eröffnet, den Keilkörper 192 bei von dem Kugelhals 12 und der Kupplungskugel 26 abgenommener Lastenträgerhalteeinrichtung 50 in der Lösestellung zu halten, so dass die Lastenträgerhalteeinrichtung 50 bei erneutem Aufsetzen auf den Kugelhals 12 mit der Kupplungskugel 26 mit der Kugelaufnahme 86 die Kupplungskugel 26 wieder aufnehmen kann und sich diese bis in die Lastenträgerhaltestellung bewegen kann, ohne dass eine Behinderung der Bewegung der Kupplungskugel 26 in der Kugelaufnahme durch das Fixierelement 172 erfolgt.

Außerdem wird kurz bevor die Kupplungskugel 26 in der Kugelaufnahme 86 die Lastenträgerhaltestellung erreicht dies von der Abtasteinrichtung 240 erkannt und dadurch von der Sicherungsschiebersteuerung 230die Lösestellungssicherung 220 in die entsicherte Stellung bewegt, so dass die Fixiereinrichtung 170 mit dem Fixierelement 172 in die Fixierstellung übergehen kann.

Im Einzelnen erfolgt dies dadurch, dass der Taststift 238 betätigt wird, so dass der Bahnfolger 236 des Taststifts 238 mit der Kulissenbahn 234 zusammenwirkt und den Sicherungsschieber 222 wieder in die entsichernde Stellung gemäß Fig. 7 verschiebt, wodurch die Schiebernase 224 die Bewegung des Löseelements 212 freigibt und somit das Löseelement 212 mitsamt dem Keilkörper 192 aufgrund der Wirkung des federelastischen Elements 206 von der Lösestellung in die Fixierstellung überzugehen, in welcher die Keilfläche 194 das Fixierelement 172 soweit in Richtung zur Kupplungskugel 26 bewegt, dass dieses in seiner Fixierstellung ein Lösen der Lastenträgerhalteeinrichtung 50 von dem Kugelhals 12 mit der Kupplungskugel 26 verhindert.

Somit bilden die Sicherungssteuerung 230 und die Abtasteinrichtung 240 eine Entsicherungseinrichtung 250 für die Lösestellungssicherung 220, die stets dann wirksam ist, wenn die Kupplungskugel 265 in der Lastenträgerhaltestellung steht.

Dadurch, dass jedoch das Fixierelement 172 nach wie vor durch die Keilfläche 194 beaufschlagt ist und die Keilfläche 194 unter der Kraftwirkung des federelastischen Elements 206 steht, erfährt das Fixierelement 172 in der Fixierstellung eine stete Kraftbeaufschlagung in der Querrichtung 182, und zwar in Richtung auf die Kupplungskugel 26 zu, und erzeugt somit eine auf die Kupplungskugel 26 quer zur Aufsetzkraft 184 und quer zur Aufsetzrichtung 82 wirkende Verspannkraft 186, welche die Kupplungskugel 26 an einer dem Fixierelement 172 gegenüberliegenden Seite der Kugelführungsfläche 92 anlegt und somit die Kupplungskugel 26 und den Gehäusekörper 84 mitsamt dem Fixierelement 172 gegeneinander verspannt, so dass ein gegebenenfalls noch vorhandenes Spiel der Kupplungskugel 26 in der Kugelaufnahme 86 durch diese Verspannkraft 186 eliminiert wird.

Da gleichzeitig auch die Aufsetzraft 184 auf das Positionsaufnahmeelement 104 wirkt und diese gegen den Positionierkörper 54, insbesondere mit den Stützflächenbereichen 122 und 124 gegen die Positionierflächenbereiche 72 und 74, drückt, lässt eine im Wesentlichen spielfreie Verspannung des Gehäusekörpers 84 relativ zum Kugelhals 12 mit der Kupplungskugel 26 erreichen.

Vorzugsweise ist bei dem zweiten Ausführungsbeispiel das Löseelement 212 in Form des Lösehebels derart angeordnet, dass eine zum Überführen desselben von der nicht betätigten Stellung, in die Fig. 8 gestrichelt dargestellt, in die betätigte Stellung, in Fig. 8 durchgezogen dargestellt, erforderliche Kraft KL nicht nur den Lösehebel bewegt, sondern gleichzeitig auch zu einer gesamten Kraftwirkung auf die Lastenträgerhalteeinrichtung führt, die entgegengesetzt zur Aufsetzrichtung 82 wirkt, so dass bei ausreichend stabiler Ausgestaltung der Betätigungseinrichtung 190 die Kraft KL auch dazu mit eingesetzt werden kann, um nach Überführen der Betätigungseinrichtung 190 in die Lösestellung gleichzeitig auch die Lastenträgerhalteeinrichtung 50 von dem Kugelhals 12 mit der Kupplungskugel 26 abzuheben, um ein vereinfachtes Anheben des Lastenträgers 40 beim Abnehmen desselben von dem Kugelhals 12 mit der Kupplungskugel 26 zu ermöglichen.

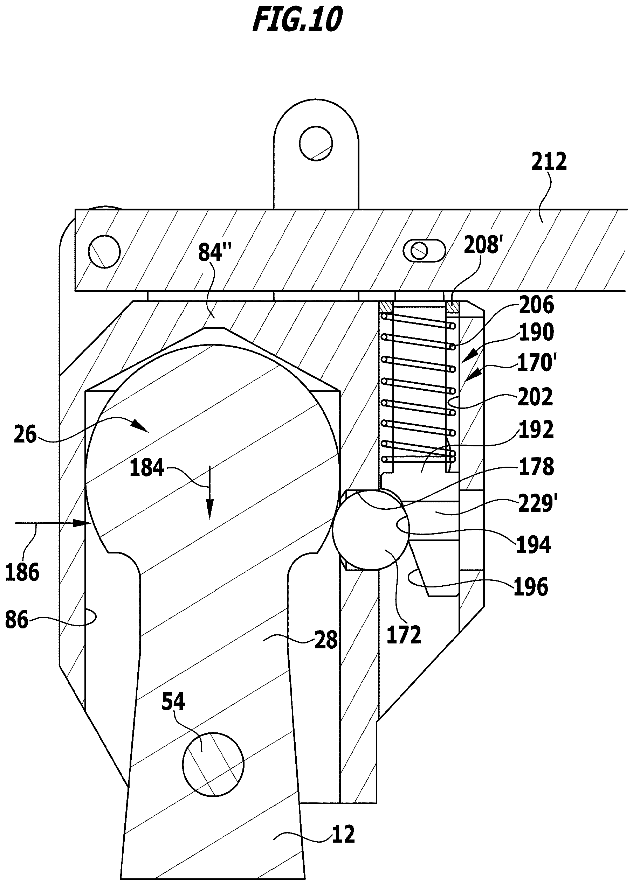

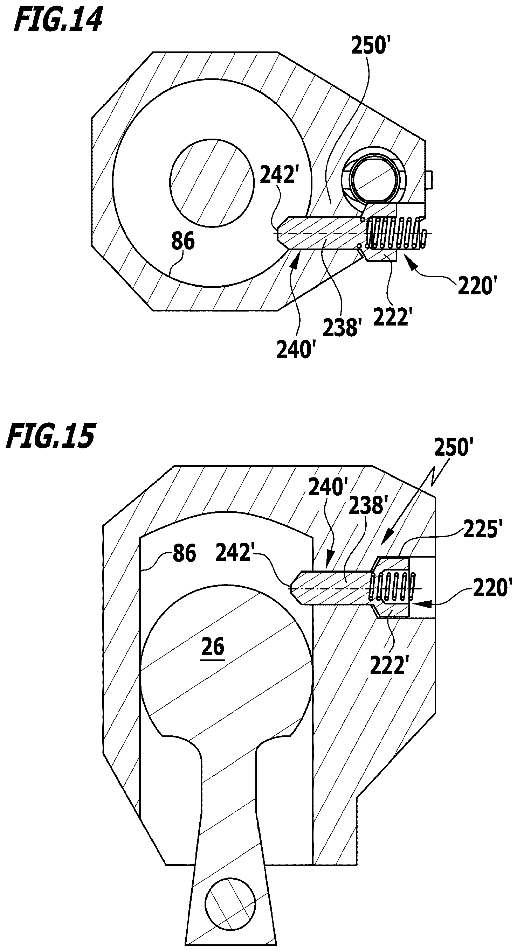

Bei einem dritten Ausführungsbeispiel einer erfindungsgemäßen Lastenträgerhalteeinrichtung 50, dargestellt in den Fig. 10 bis 15, ist der Kugelhals 12 mit der Kupplungskugel 26 sowie der Gehäusekörper 84" mit der Kugelaufnahme 86 in gleicher Weise ausgebildet, wie im ersten und zweiten Ausführungsbeispiel beschrieben.

Darüber hinaus sind auch die Positionierkörper 54 und die Positionsaufnahmeelemente 104 in gleicher Weise ausgebildet, wie im Zusammenhang mit dem ersten und zweiten Ausführungsbeispiel beschrieben, so dass auf die Ausführungen zum ersten und zweiten Ausführungsbeispiel vollinhaltlich Bezug genommen werden kann.

Ferner ist bei dem dritten Ausführungsbeispiel die Fixiereinrichtung 170' im Wesentlichen gleich ausgebildet, wie beim zweiten Ausführungsbeispiel, insbesondere ist das Fixierelement 172 in der Führungsbohrung 178 sowie der Keilkörper 192 mit der Keilfläche 194 in gleicher Weise ausgebildet, wie dies im Zusammenhang mit dem zweiten Ausführungsbeispiel beschrieben ist.

Auch das Löseelement 212 ist als Hebel ausgebildet und wirkt mit dem Keilkörper 192 zusammen, so dass sich dieselben Funktionen bei Betätigung des Löseelements 212 ergeben, wie im Zusammenhang mit dem ersten Ausführungsbeispiel beschrieben.

Der einzige Unterschied zum zweiten Ausführungsbeispiel ist der, dass das federelastische Element 206 mitsamt dem Keilkörper 192 in einem Teil der Keilführung 202 angeordnet ist und dass das Stützlager 208' als den Keilkörper 192 umschließender und ein Gegenlager für das federelastische Element 206 bildender Ring ausgebildet ist, der eine zusätzliche Führung für den Keilkörper 192 bildet.

Darüber hinaus ist auch das Zusammenwirken des Keilkörpers 192 mit dem Fixierelement 172 identisch, wie im Zusammenhang mit dem zweiten Ausführungsbeispiel beschrieben, wobei auch das federelastische Element 206 die gleiche Wirkung entfaltet, wie im Zusammenhang mit dem zweiten Ausführungsbeispiel erläutert.

Bei dem dritten Ausführungsbeispiel ist allerdings die Lösestellungssicherung 220' anders ausgeführt.

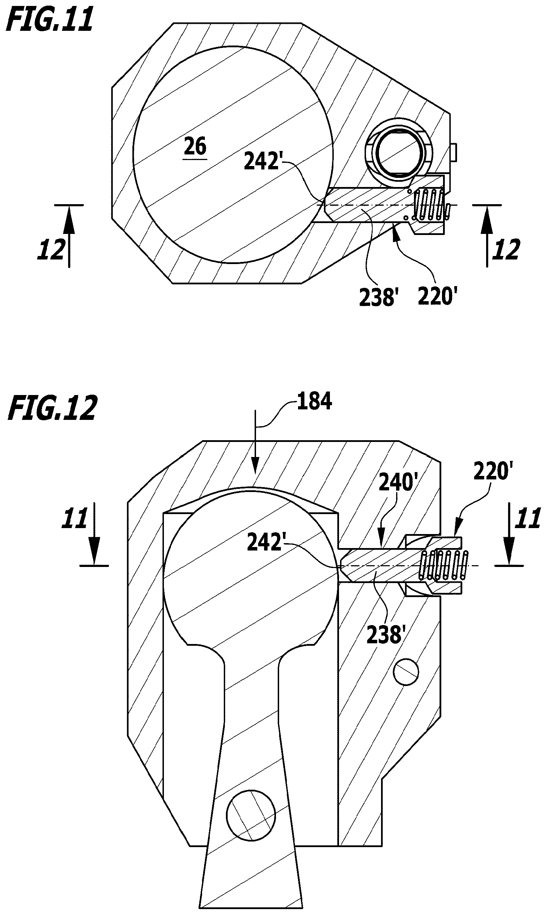

Die Lösestellungssicherung 220' umfasst ebenfalls als Abtasteinrichtung 230' einen Taststift 238, welcher mit einer Tastspitze 242 die Präsenz der Kupplungskugel 26 in der Lastenträgerhaltestellung erfasst und in dieser Lastenträgerhaltestellung den Taststift 238 in eine Entsicherungsstellung verschiebt, wie in Fig. 11 und 12 dargestellt, während der Taststift 238 dann, wenn die Kupplungskugel 26 die Lastenträgerhaltestellung verlassen hat, sich der Taststift 238 mit der Tastspitze 242 in die Kugelaufnahme 86 hineinbewegt.

Der Taststift 238' ist dabei direkt mit dem Sicherungsschieber 222 verbunden, so dass der Taststift 238' und der Sicherungsschieber 222' sich gemeinsam bewegen.

Somit wirkt bei dem dritten Ausführungsbeispiel die Abtasteinrichtung 230' direkt auf die Lösestellungssicherung 220 und bildet alleine die Entsicherungseinrichtung 250'.

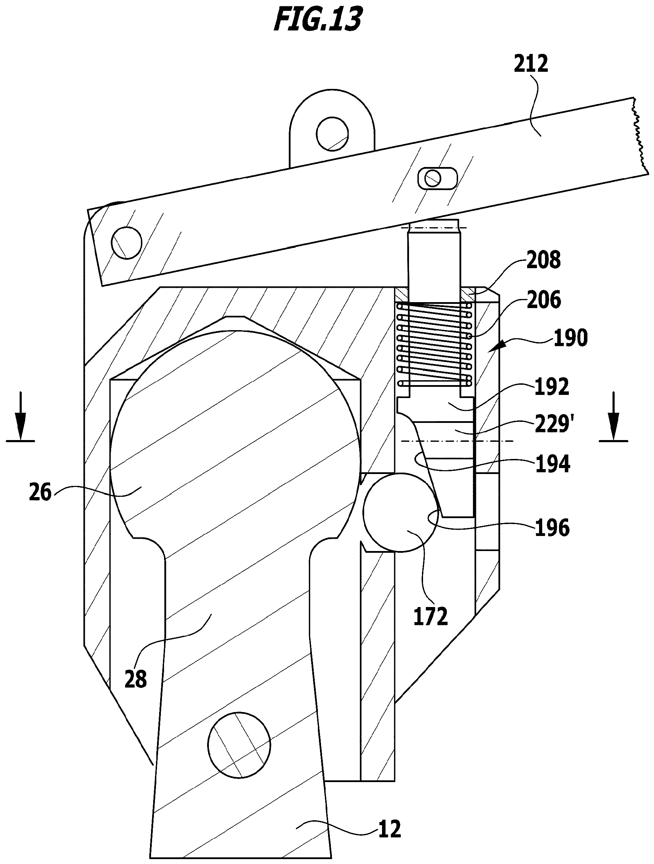

Bei dem dritten Ausführungsbeispiel ist dabei der Sicherungsschieber 222' als Zylinderkörper ausgebildet, dessen Zylindermantelfläche 225' die Möglichkeit hat, sich in eine seitliche Vertiefung 229' des Keilkörpers 192 hinein zu bewegen, wenn der Keilkörper 192 in der Lösestellung steht und wenn die Kupplungskugel 26 die Lastenträgerhaltestellung verlassen hat, wie dies in den Fig. 13, 14 und 15 dargestellt ist, so dass dann der Sicherungsschieber 221 in einer Sicherungsstellung steht.

In dieser Sicherungsstellung bewirkt dann der Sicherungsschieber 222' im Zusammenwirken zwischen der Umfangsfläche 225' und der Vertiefung 229' eine Blockierung des Keilkörpers 192, so dass das federelastische Element 206 den Keilkörper 192 nicht mehr von der Lösestellung in die Fixierstellung bewegen kann.

Erst dann, wenn durch die in die Kugelaufnahme 86 hineinbewegte Kupplungskugel 26 bei Erreichen der Lastenträgerhaltestellung eine Betätigung der Tastspitze 242' des Taststifts 238' erfolgt, verschiebt der Taststift 238 den Sicherungsschieber 222' von der die Bewegung des Keilkörpers 192 blockierenden Sicherungsstellung in die in Fig. 11 und 12 dargestellte Entsicherungsstellung, so dass sich dann wiederum der Keilkörper 192' unter Wirkung des federelastischen Elements 206' von der Lösestellung in die Fixierstellung bewegen kann und das Fixierelement 172 in Richtung der Kupplungskugel 26 bewegen kann.

Im Übrigen ist die Funktion des dritten Ausführungsbeispiels identisch mit der im Zusammenhang mit dem zweiten Ausführungsbeispiel beschriebenen Funktion, so dass auf die Ausführungen zum zweiten Ausführungsbeispiel vollinhaltlich Bezug genommen werden kann.

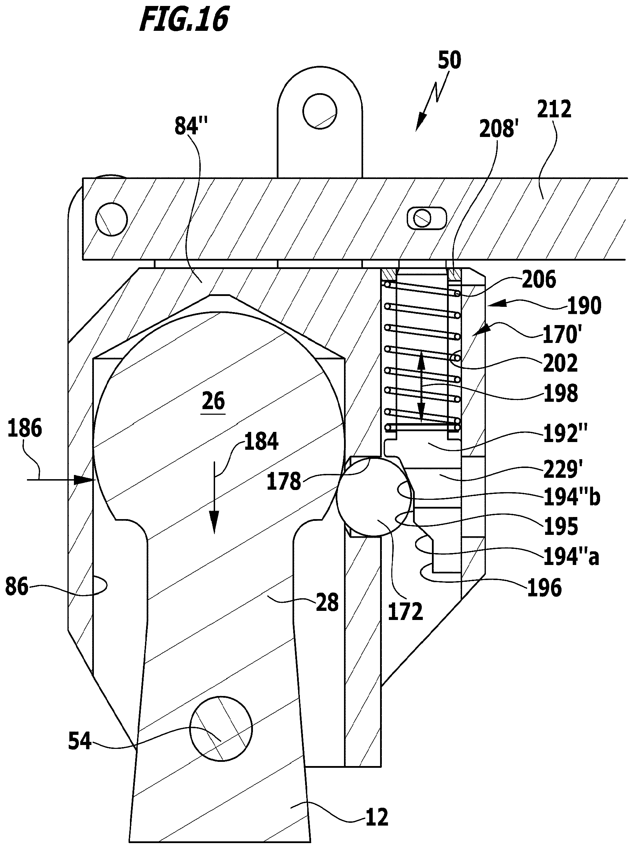

Bei einem vierten Ausführungsbeispiel einer erfindungsgemäßen Lastenträgerhalteeinrichtung 50, dargestellt in Fig. 16, ist der Keilkörper 192" anders ausgebildet, da zwei Keilflächen 194"a und 194"b vorgesehen sind, wobei die Keilfläche 194"a sich unmittelbar an die Rückzugsfläche 196 anschließt und mit einer größeren Neigung zur Verschieberichtung 198 verläuft, als die Keilfläche 194"b, die mit geringerer Neigung zur Verschieberichtung 198 verläuft.

Bei der anfänglichen Verschiebung des Keilkörpers 172 von der Lösestellung in Richtung der Fixierstellung, ist ausgehend von der Rückzugsfläche 196 nur eine geringere Kraft erforderlich ist, da während dieser Verschiebung das Fixierelement 172 noch nicht an der Kupplungskugel 26 anliegt, so dass die Keilfläche 192"a eine stärkere Neigung zur Verschieberichtung 198 aufweisen kann.

In der Fixierstellung soll mit einer möglichst großen Kraft auf das Fixierelement 172 eingewirkt werden, um dieses mit möglichst großer Kraft auf die Kupplungskugel 26 wirken zu lassen, so dass die Keilfläche 194"b eine geringere Neigung zur Verschieberichtung 198 aufweist als die Keilfläche 194"a.

Darüber hinaus ist vorzugsweise noch zwischen der ersten Keilfläche 194"a und der zweiten Keilfläche 194"b eine näherungsweise parallel zur Verschieberichtung 198 verlaufende Sicherungsfläche 195 vorgesehen, welche so angeordnet ist, dass dann, wenn das Fixierelement 172 an der Sicherungsfläche 195 anliegt, das Fixierelement 172 bereits soweit in Richtung der Kupplungskugel 26 verschoben ist, dass diese die Lastenträgerhalteeinrichtung 50 gegen ein Abheben von dem Kugelhals 12 mit der Kupplungskugel 26 sichert, allerdings noch kein Verspannen des Gehäusekörpers 84 dem Kugelhals 12 und der Kupplungskugel 26 durch das Fixierelement 172 erfolgt ist.

Dieses Verspannen wird durch die Keilfläche 194"b erreicht, die zum Aufbringen einer möglichst großen Kraft auf die Kupplungskugel 26 die geringere Neigung relativ zu der Verschieberichtung 198 aufweist, so dass ein größerer Weg des Keilkörpers 192 in der Verschieberichtung 198 erforderlich ist, um letztendlich das Verspannen der Kupplungskugel 26 relativ zum Gehäusekörper 84 mittels des Fixierelements 172 zu erreichen.

Die Sicherungsfläche 195 hat den Vorteil, dass selbst dann, wenn sich das Verspannen aufgrund großer Einwirkung der Kräfte lösen sollte, ein weiteres Lösen der Fixierung durch einwirkende Kräfte nicht mehr möglich ist, so dass sich die Fixierung der Lastenträgerhalteeinrichtung 50 am Kugelhals 12 mit der Kupplungskugel 26 nicht kraftbedingt lösen kann.

Im Übrigen sind alle weiteren Elemente des vierten Ausführungsbeispiels identisch mit denen des dritten Ausführungsbeispiels, so dass hinsichtlich der gesamten Beschreibung vollinhaltlich auf die Ausführungen zum dritten Ausführungsbeispiel Bezug genommen werden kann.

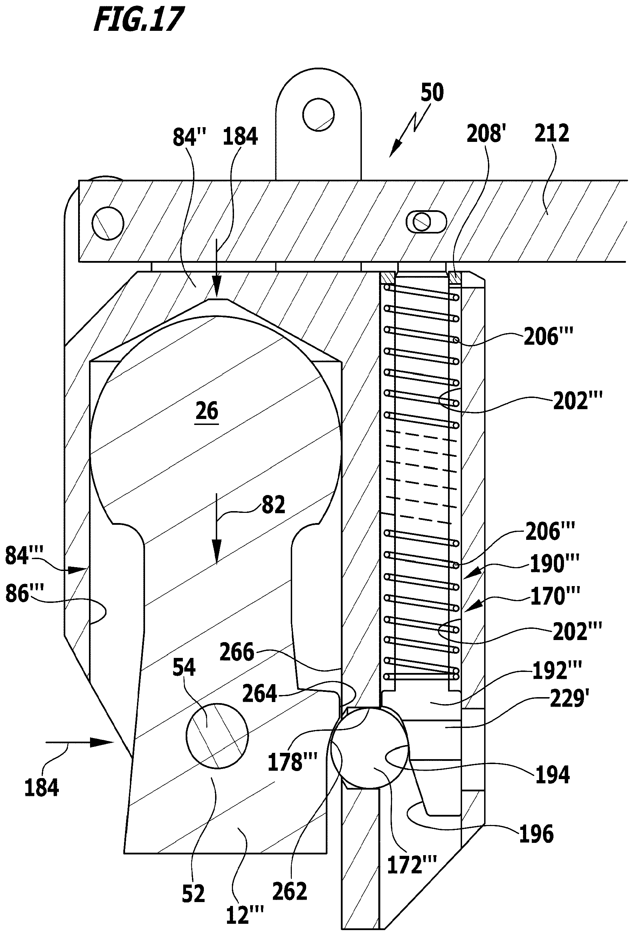

Bei einem fünften Ausführungsbeispiel einer erfindungsgemäßen Lastenträgerhalteeinrichtung 50, dargestellt in Fig. 17, ist im Gegensatz zum dritten Ausführungsbeispiel die Fixiereinrichtung 170"' so ausgebildet, dass das Fixierelement 172"' nicht an der Kupplungskugel 26 in seiner verriegelten Stellung angreift, sondern an einer als Hinterschneidung 173"' ausgebildeten Fixierelementaufnahme des Kugelhalses 12"', welche beispielsweise auf einer der Kraftfahrzeugkarosserie 20 abgewandten Seite des Kugelhalsabschnitts 52 angeordnet ist, der seinerseits den mindestens einen Positionierkörper 54 trägt.

Ferner liegt die Hinterschneidung 262 auf einer der Kupplungskugel 26 abgewandten Seite einer vom Kugelhalsabschnitt 52 gebildeten Stützfläche 264, an welcher der Gehäusekörper 84"' mit der Kugelaufnahme 86"' anliegt, wobei bei den fünften Ausführungsbeispiel der mindestens eine Positionierkörper 54 mit dem zeichnerischen Fig. 17 nicht dargestellten Positionsaufnahmeelement 104 so zusammenwirkt, dass der Gehäusekörper 84"' mit einem an die Führungsbohrung 178"' angrenzenden Teilbereich 266 der Kugelaufnahme 86 anliegt.

Ferner sind der mindestens eine Positionierkörper 54 sowie das Positionsaufnahmeelement 104 ebenfalls so angeordnet, dass in der aufgesetzten Stellung des Gehäusekörpers 84 das Fixierelement 172"' in seiner Fixierstellung an der Hinterschneidung 262 anliegen und somit den Gehäusekörper 84 mit einer Kraft in der Aufsetzrichtung 82 beaufschlagen kann, in gleicher Weise wie dies beim dritten Ausführungsbeispiel dann der Fall ist, wenn das Fixierelement 172 an der Kupplungskugel 26 anliegt.

Im Übrigen ist das fünfte Ausführungsbeispiel in gleicher Weise ausgebildet, wie das dritte Ausführungsbeispiel oder die voranstehenden Ausführungsbeispiele, so dass bezüglich der übrigen Merkmale vollinhaltlich auf die Ausführungen zu diesen Ausführungsbeispielen Bezug genommen werden kann.

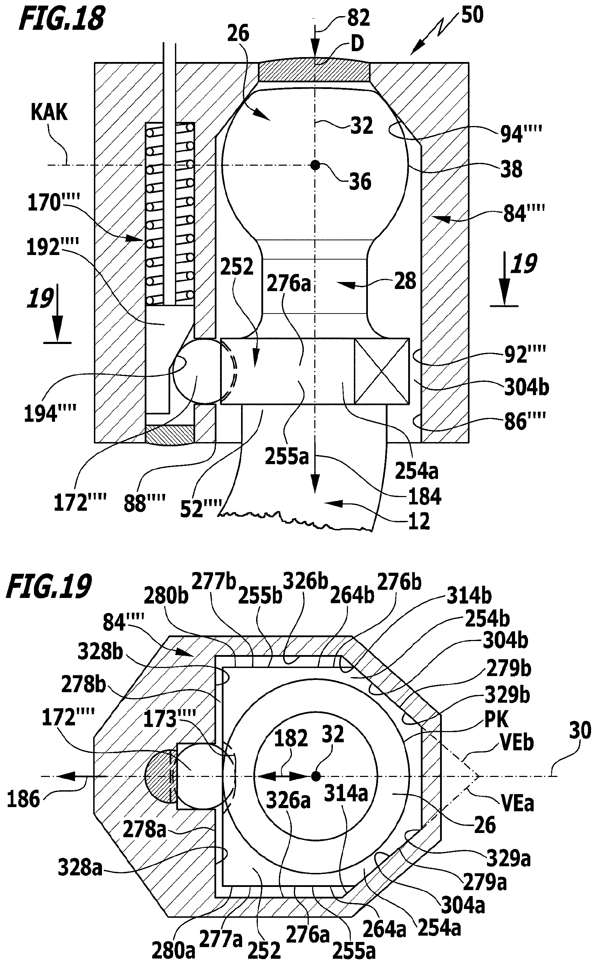

Bei einem sechsten Ausführungsbeispiel einer erfindungsgemäßen Lastenträgerhalteeinrichtung 50, dargestellt in Fig. 18 und 19, ist der Gehäusekörper 84"" mit der Kugelaufnahme 86"" versehen, die sich, wie bei den voranstehenden Ausführungsbeispielen beschrieben, von der Aufnahmeöffnung 88"" mit den Kugelführungsflächen 92"" bis zur Endfläche 94"" erstreckt, wobei bei diesem Ausführungsbeispiel die Endfläche 94"" eine konische Form aufweist und in der Lastenträgerhaltestellung auf der Kupplungskugel 26, insbesondere der Kugelfläche 38 der Kupplungskugel 26 aufsitzt, so dass bei diesem sechsten Ausführungsbeispiel die Kupplungskugel 26 den Gehäusekörper 84"" trägt.

Bei dem sechsten Ausführungsbeispiel erstreckt sich der Gehäusekörper 84"" in der Lastenträgerhaltestellung mit den Kugelführungsflächen 92"" ausgehend von der Endfläche 94"" in der Aufsetzrichtung 82 sowohl über die Kupplungskugel 26 hinweg als auch über den Kugelansatz 28 hinweg und umgreift auch noch mit den Kugelführungsflächen 92"" einen an dem Kugelhalsansatz 52"" angeordneten Kragen 252, welcher beispielsweise in unmittelbarem Anschluss an den Kugelansatz 28 an dem Kugelhals 12 angeordnet ist.

Der Kragen 252 bildet, wie in Fig. 18 und 19 dargestellt, zwei Positionierkörper 254a und 254b, die auf einander gegenüberliegenden Seiten der Längsmittelebene 30 und insbesondere symmetrisch zu dieser angeordnet sind und sich ausgehend von dem Kugelhalsabschnitt 52"" quer zu diesem erstrecken und dabei Positionierflächen 264a und 264b aufweisen, wobei sich die Positionierkörper 254a und 254b quer zum Kugelhalsabschnitt 52"" soweit erstrecken, dass die Positionierflächen 264a und 264b außerhalb der Projektionskontur der Kupplungskugel 26 auf die Positionierkörper 254a und 254b liegen.

Insbesondere liegen die Positionierflächen 264a und 264b auf einer dem Kugelhalsabschnitt 52"" abgewandten Außenseite 255 des jeweiligen Positionierkörpers 254a, 254b und erstrecken sich vorzugsweise parallel zur Aufsetzrichtung 82, so dass die gesamten Positionierflächen 264a und 264b Führungsflächenbereiche 276a, 276b bilden, die den Gehäusekörper 84"" beim Aufsetzen auf den Kugelhals 12 mit der Kupplungskugel 26 parallel zur Aufsetzrichtung 82 führen, wobei die Kugelführungsflächen 92"" relativ zu den Führungsflächenbereichen 276a, 276b mit Spiel verlaufen können.

Allerdings haben die Führungsflächenbereiche 276a, 276b eine von einem rotationssymmetrischen Verlauf zur Mittelachse 32 abweichenden Verlauf.

Beispielsweise verlaufen die Führungsflächenbereiche 276a und 276b mit Positionierflächenbereichsabschnitten 277a, 277b parallel zueinander und insbesondere parallel zur Längsmittelebene 30 des Kugelhalses 12 und mit einem Führungsflächenquerabschnitt 278a, 278b quer zu den Führungsflächenabschnitten 277a, 277b und quer zur Längsmittelebene 30, wobei die Führungsflächenquerabschnitte 278a und 278b vorzugsweise ineinander übergehen.

Vorzugsweise liegen die Führungsflächenquerabschnitte 278a, 278b auf einer dem Kugelhalsträger 16 zugewandten Seite des Kugelhalsabschnitts 52"" und der Heckpartie 18 der Kraftfahrzeugkarosserie 20 zugewandten Seite des Kugelhalsabschnitts 52"".

Ferner bilden die Führungsflächenbereiche 276a, 276b auf ihrer dem Kugelhalsträger 16 oder der Heckpartie 18 der Kraftfahrzeugkarosserie 20 abgewandten Seite Verkeilflächenabschnitte 279a, 279b, die schräg zur Längsmittelebene 30 verlaufen und sich in Ebenen VEa, VEb erstrecken, die miteinander einen Winkel von weniger als 120°, vorzugsweise weniger als 100°, noch besser weniger als 90°, einschließen.

Insbesondere sind die Führungsflächenbereiche 276a, 276b Teilflächen eines geometrischen, in diesem Fall vieleckigen Zylinders 280, der den Kugelhalsabschnitt 54"" nicht schneidet.

Bei diesem sechsten Ausführungsbeispiel bildet der Gehäusekörper 84"" mit den Kugelführungsflächen 92"" Positionsaufnahmeelemente 304a, 304b, die mit ihren Aufnahmeflächen 314a, 314b den Positionierflächen 264a, 264b der Positionierkörper 254a, 254b zugewandt sind.

Insbesondere ist der Verlauf der Aufnahmeflächen 314 an den Verlauf der Positionierflächen 264 angepasst.

Ferner umfassen die Aufnahmeflächen 314 Führungsflächenbereiche 326, 326b, die den Führungsflächenabschnitten 277a, 277b zugewandte Führungsflächenabschnitte 327a, 327b aufweisen, Führungsflächenquerabschnitte 328a, 328b, die den Führungsflächenquerabschnitten 278a, 278b zugewandt sind, und Verkeilflächenabschnitte 329a, 329b, die den Verkeilflächenabschnitten 279a, 279b zugewandt sind.

Durch das Spiel zwischen den Positionierflächen 264a, 264b und den Aufnahmeflächen 314a, 314b besteht die Möglichkeit, den Gehäusekörper 84"" relativ zu den Positionierkörpern 254a, 254b mit Spiel zu bewegen.

Allerdings ist das Spiel so gering, dass die Positionierkörper 254a, 254b mit den Positionsaufnahmeelementen 304a, 304b derart zusammenwirken, dass eine Drehung um eine ungefähr parallel zur Aufsetzrichtung 82 verlaufende Drehachse D des Gehäusekörpers 84"" relativ zum Kugelhals 12 mit den Positionierkörpern 254a, 254b nicht möglich ist. Somit verhindern die mit Spiel relativ zu den Positionierkörpern 254a, 254b angeordneten Positionsaufnahmeelemente 304a, 304b bereits ihrer einen Formschluss bildenden Anordnung ohne weitere Maßnahmen ein Verdrehen des Gehäusekörpers 84"" um eine ungefähr parallel zur Aufsetzrichtung 82 ausgerichtete Drehachse D.

Ferner verhindern die Positionierflächen 264a, 264b im Zusammenwirken mit den Aufnahmeflächen 314a, 314b trotz des Spiels ein nennenswertes Verkippen des Gehäusekörpers 84"" um quer zur Mittelachse 32 der Kupplungskugel 26 verlaufende Kippachsen KAK relativ zum Kugelhals 12 und zur Kupplungskugel 26.

Um das Spiel zwischen den Positionierkörpern 254a, 254b und den Positionsaufnahmeelementen 304a, 304b möglichst weitgehend zu entfernen, ist der Gehäusekörper 84"" in der Querrichtung 182 mit einer Verspannkraft 186 beaufschlagbar, wobei die Beaufschlagung mit der Verspannkraft in der Querrichtung 182 von den Seiten der Positionierkörper 254a, 254b wegweist, welche die Verkeilflächenabschnitte 279a, 279b tragen, so dass die Verkeilflächenabschnitte 329a, 329b der Positionsaufnahmeelementen 304a, 304b an den Verkeilflächenabschnitten 279a bzw. 279b kraftbeaufschlagt zur Anlage kommen und damit zu einer spielarmen oder spielfreien Positionierung der Positionsaufnahmeelementen 304a, 304b relativ zu den Positionierkörpern 254a, 254b führen, in dem lediglich die Verkeilflächenabschnitte 329a, 329b an dem Positionsaufnahmeelement 304a, 304b an den Verkeilflächenabschnitten 279a, 279b der Positionierkörper 254a, 254b anliegen.

Diese Verspannkraft186 wird erzeugt durch die Fixiereinrichtung 170"" mit dem Fixierelement 172"", welches in diesem Fall in die Fixierelementaufnahme 173"" eingreift, die an dem Kragen252, und zwar im Bereich der Führungsflächenquerabschnitte 278a, 278b angeordnet ist, beispielsweise in Form einer Vertiefung oder Hinterschneidung, und so ausgebildet ist, dass die Fixierelementaufnahme 173"" durch Zusammenwirken mit dem Fixierelement 172"" einerseits die Aufsetzkraft 184erzeugt, um den Gehäusekörper 84"" in Richtung der Aufsetzrichtung 82 zu beaufschlagen und andererseits die Verspannkraft 186 erzeugt, um den Gehäusekörper 84"" in der Querrichtung 182 zu beaufschlagen.

Somit dient das Fixierelement 174"" einerseits zur Fixierung des Gehäusekörpers 84"" relativ zum Kugelhals 12 und zur Kupplungskugel 26 und andererseits zur spielarmen oder spielfreien Fixierung des Gehäusekörpers 84"" mit den Positionsaufnahmeelementen 304a, 304b relativ zu den Positionierkörpern 254a, 254b und außerdem zur Sicherung des Gehäusekörpers 84"" gegen ein Abheben von dem Kugelhals 12 mit der Kupplungskugel 26.

Insbesondere ist die Fixiereinrichtung 170"" in gleicher Weise ausgebildet, wie beispielsweise die Fixiereinrichtung 170' des dritten Ausführungsbeispiels oder die Fixiereinrichtung 170" des vierten oder auch fünften Ausführungsbeispiels der erfindungsgemäßen Lastenträgerhalteeinrichtung, so dass bezüglich aller weiteren Merkmale und Eigenschaften auf die Ausführungen zu den voranstehenden Ausführungsbeispielen insbesondere die Ausführungen zum dritten und/oder vierten und/oder fünften Ausführungsbeispiel der erfindungsgemäßen Lastenträgerhalteeinrichtung vollinhaltlich Bezug genommen werden kann.

Insbesondere ist im sechsten Ausführungsbeispiel auch die Fixiereinrichtung 170"" mit einer Betätigungseinrichtung 190 sowie einer entsprechend dem dritten und vierten Ausführungsbeispiel ausgebildeten Lösestellungssicherung 220, sowie einer Abtasteinrichtung 240, welche beispielsweise die Position des Kragens 252 erfasst, und einer Entsicherungseinrichtung 250 versehen, die in gleicher Weise wie beim dritten oder vierten Ausführungsbeispiel ausgebildet sind.

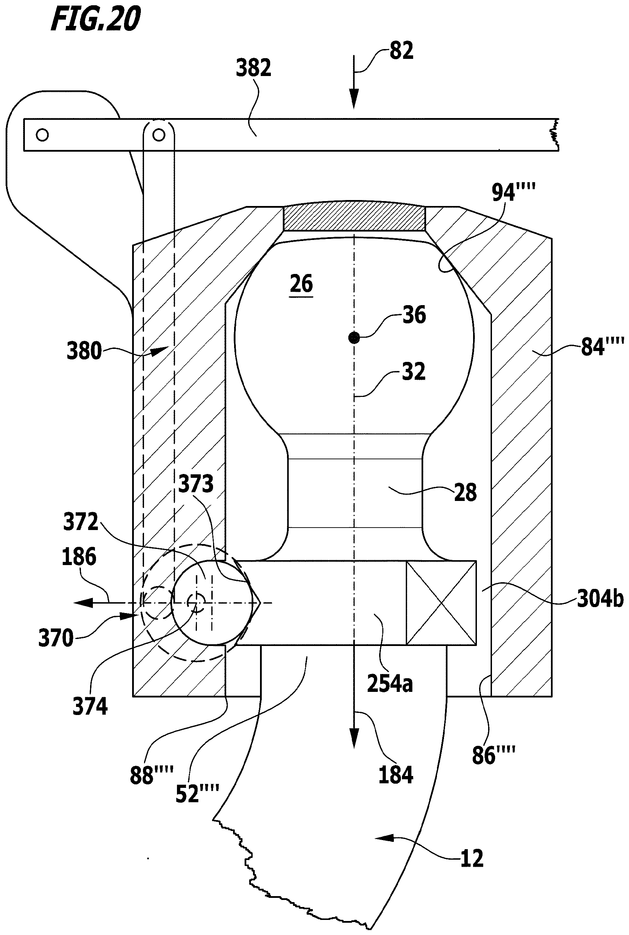

Bei einem siebten Ausführungsbeispiel, dargestellt in Fig. 20, sind der Gehäusekörper 84"", die Positionierkörper 254a und 254b sowie die Positionsaufnahmeelemente 304a, 304b in gleicher Weise ausgebildet, wie beim sechsten Ausführungsbeispiel, so dass diesbezüglich vollinhaltlich auf die Ausführungen zum sechsten Ausführungsbeispiel verwiesen werden kann.

Der Unterschied zwischen dem siebten und dem sechsten Ausführungsbeispiel liegt ausschließlich in der Ausbildung der Fixiereinrichtung 370, die in diesem Fall einen Exzenterkörper 372 umfasst, welcher um eine Exzenterachse 374 drehbar am Gehäusekörper 84"" gelagert ist, wobei sich die Exzenterachse 374 beispielsweise quer, insbesondere senkrecht zur Längsmitteleben 30 erstreckt.

Insbesondere verläuft die Exzenterachse 374 parallel zu den Führungsflächenabschnitten 278a und 278b der Positionierkörper 254a, 254b.

Der Exzenterkörper 372 ist in eine Exzenteraufnahme 373 des Kragens 252 oder der Positionierkörper 254a, 254b hinein bewegbar oder aus dieser Exzenteraufnahme 373 heraus bewegbar, um eine Fixierung des Gehäusekörpers 84"" relativ zu dem Kugelhals 12 und der Kupplungskugel 26 zu erreichen.

Der Exzenterkörper 372 wirkt dabei in gleicher Weise wie das Fixierelement 172"" der Fixiereinrichtung 170"", wie beispielsweise im Zusammenhang mit dem sechsten Ausführungsbeispiel beschrieben, das heißt der Exzenterkörper 372 bewirkt in seiner Fixierstellung, in welche er in die Exzenteraufnahme 373 des Kragens 252 oder der Positionierkörper 254a, 254b eingreift, einerseits eine Beaufschlagung des Gehäusekörpers 84"" in der Querrichtung 182 und andererseits eine Beaufschlagung des Gehäusekörpers 84"" in der Aufsetzrichtung 82, so dass damit die Aufsetzkraft 184 und die Verspannkraft 186 erzeugt werden können und folglich auch dieselben Funktionalitäten wie beim sechsten Ausführungsbeispiel erreicht werden können.

Diesbezüglich wird somit auch ebenfalls vollinhaltlich auf die Ausführungen zum sechsten Ausführungsbeispiel oder zu den übrigen voranstehenden Ausführungsbeispielen Bezug genommen.

Beispielsweise lässt sich der Exzenterkörper 372 um die Exzenterachse 374 dadurch verdrehen, dass ein Betätigungsgestänge 380 vorgesehen ist, welcher ein Löseelement 382 aufweist, das entsprechend den Löseelementen, die im Zusammenhang mit den voranstehenden Ausführungsbeispielen beschrieben wurden, betätigbar ist.

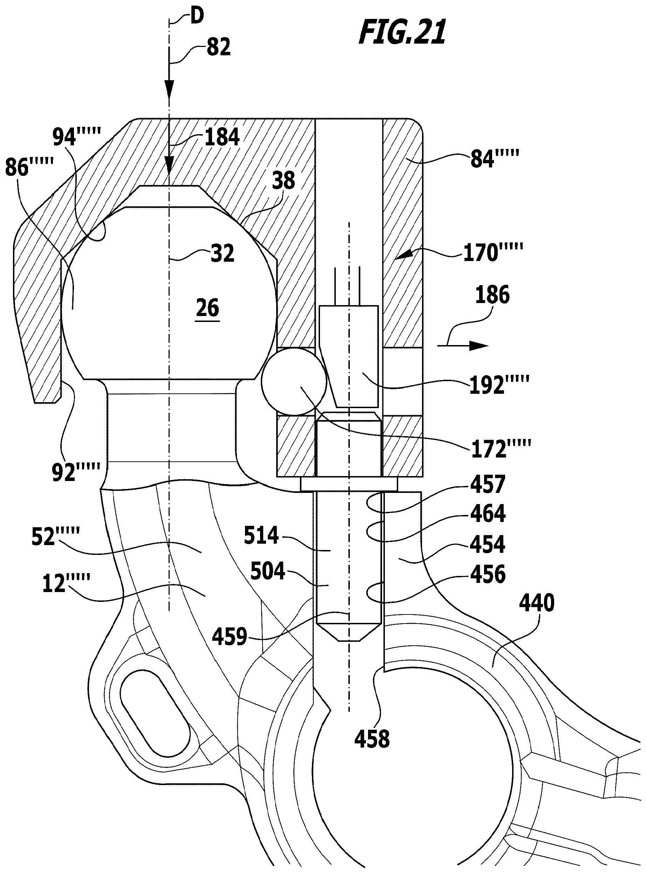

Bei einem achten Ausführungsbeispiel, dargestellt in Fig. 21 umfasst der Gehäusekörper 84""' die Kugelaufnahme 86""', welche sowohl die Kugelführungsfläche 92""' als auch die Endfläche 94""' aufweist, wobei die Endflächen 94""' in der Lastenträgerhaltestellung auf der Kugelfläche 38 der Kupplungskugel 26 aufsitzt.

Ferner ist in den Gehäusekörper 84""', in gleicher Weise wie beim dritten oder vierten Ausführungsbeispiel mit der Fixiereinrichtung 170""' versehen, die in gleicher Weise wie beim dritten oder vierten Ausführungsbeispiel ausgebildet ist, wobei das Fixierelement 172""' in gleicher Weise wie beim dritten Ausführungsbeispiel an der Kupplungskugel 26 angreift.

Abweichend von den bislang beschriebenen Ausführungsbeispielen ist der Kugelhals 12""' mit durch die Längsmittelebene 30 getrennten Positionierkörpern 454 versehen, welche sich quer zum Verlauf des Kugelhalses 12, insbesondere des Kugelhalsabschnitts 52""', erstrecken und beispielsweise an den Kugelhalsabschnitt 52""' und eine Steckdosenaufnahme 440 angeformt sind. In diesem Fall weisen die Positionierkörper 454 innenliegende Positionierflächen 464 auf, die durch eine in die Positionierkörper 454 eingebrachte Bohrung 456 gebildet wird, wobei die Bohrung 456 eine Öffnung 457 aufweist, welche dem Gehäusekörper 84""' zugewandt ist, wenn dieser in der Lastenträgerhaltestellung angeordnet ist und mit der Kugelaufnahme 86""' die Kupplungskugel 26 aufnimmt.

Insbesondere verläuft die Bohrung 456 vorzugsweise mit einer Mittelachse 459 parallel zur Mittelachse 32 der Kupplungskugel 26 und auch insbesondere parallel zur Aufsetzrichtung 82, wobei eine Zylinderfläche 458 der Bohrung 456 den Kugelhals 12 schneidet.

Die Positionsaufnahmeelemente 504 sind bei diesem achten Ausführungsbeispiel ebenfalls durch die Längsmittelebene getrennt und beispielsweise durch einen Vorsprung ausgebildet, welcher sich ausgehend von dem Gehäusekörper 84""' erstreckt, und zwar parallel zur Aufsetzrichtung 82, so dass der Vorsprung in der Lage ist, in die Bohrung 456 des Positionierkörpers 454 einzugreifen und mit seinen Aufnahmeflächen 514 mit der Positionierflächen 464 der Positionierelemente 454 zusammenzuwirken.

In diesem Fall weisen sowohl die Positionierflächen 464 der Positionierkörper 454 als auch die Aufnahmeflächen 514 der Positionsaufnahmeelemente 504 lediglich Führungsflächenbereiche auf, die parallel zur Aufsetzrichtung 82 verlaufen, so dass das Positionsaufnahmeelement 504 mit seinen Aufnahmeflächen 514 beim Aufsetzen des Gehäusekörpers 84""' auf die Kupplungskugel 26 den Positionierflächen 464 des Positionierkörpers 454 in Wechselwirkung treten kann, nämlich dadurch, dass der die Positionsaufnahmeelemente 504 bildende Vorsprung in die Bohrung 456 eingreift, um damit den Gehäusekörper 84""' relativ zur Kupplungskugel 26 sowohl gegen Kippbewegungen um quer zur Mittelachse 32 verlaufende Kippachsen KAK und auch gegenüber Drehbewegungen um die ungefähr parallel zur Aufsetzrichtung 82 ausgerichtete Drehachse D zu verhindern.

Wie bei den voranstehenden Ausführungsbeispielen beschrieben, dient das Fixierelement 172""' ebenfalls dazu, das Spiel zwischen den Positionierkörpern 454 und den Positionsaufnahmeelementen 504 spielarm oder spielfrei zu machen, indem das Fixierelement 172""' nicht nur die Aufsetzkraft 184, die parallel zur Aufsetzrichtung 82 gerichtete ist, erzeugt, sondern ebenfalls noch die Verspannkraft 186, die zur Entfernung des Spiels zwischen den Positionierflächen 464 und den Aufnahmeflächen 514 dient.

## Patentansprüche

1. Anhängekupplung (10) für Kraftfahrzeuge, umfassend einen mit einem ersten Ende (14) mittels eines Kugelhalsträgers (16) fahrzeugfest an einer Heckpartie (18) eines Kraftfahrzeugs montierbaren Kugelhals (12), der an einem zweiten Ende (24) eine Kupplungskugel (26) trägt, wobei an dem Kugelhals (12) in einem definierten Abstand von der Kupplungskugel (26) mindestens ein Positionierkörper (54) zur Positionierung einer auf die Kupplungskugel (26) und den Kugelhals (12) in einer Aufsetzrichtung aufsetzbaren Lastenträgerhalteeinrichtung (50) angeordnet ist, wobei der Positionierkörper (54) sich quer zu einem Verlauf des diesen Positionierkörper (54) tragenden Kugelhalsabschnitts (52) erstreckt wobei der Positionierkörper (54) mindestens eine Positionierfläche (64, 66) trägt, wobei die mindestens eine Positionierfläche (64, 66) an einer Außenseite (55) des Positionierkörpers (54) angeordnet ist, wobei der mindestens eine Positionierkörper (54) auf einander gegenüberliegenden Seiten angeordnete Positionierflächen (64, 66) aufweist, und wobei an dem Kugelhalsabschnitt (52) auf einander gegenüberliegenden Seiten desselben jeweils ein Positionierkörper (54) angeordnet ist,
**dadurch gekennzeichnet, dass** die Positionierkörper an dem Kugelhalsabschnitt (52) des Kugelhalses (12) angeordnet sind, welcher an einen die Kupplungskugel (26) tragenden Kugelansatz (28) des Kugelhalses (12) angrenzt, dass der Kugelansatz (28) eine zwischen der Kupplungskugel (26) und dem zweiten Ende (24) vorgesehene Einschnürung ist, welche sich an das zweite Ende (24) in Fortsetzung eines Verlaufs des Kugelhalses (12) anschließt und über welche die Kupplungskugel (26) mit dem zweiten Ende (24) verbunden ist, dass die Positionierkörper (54a, 54b) derart nahe an dem Kugelansatz (28) liegen, dass ein Abstand einer Scheitellinie (62) der Positionierkörper (54a, 54b) von dem Ende des Kugelhalses (12), an welchem der Kugelansatz (28) beginnt, kleiner ist als das 1,5-fache der Ausdehnung des Kugelansatzes (28) zwischen dem zweiten Ende (24) und der Kupplungskugel (26), dass sich die Positionierkörper (54) ausgehend von dem diese tragenden Kugelhalsabschnitt (52) in einer Erstreckungsrichtung (59) von dem Kugelhalsabschnitt (52) weg erstrecken, dass sich die Erstreckungsrichtung (59) der Positionierkörper (54) quer zu dem diese tragenden Kugelhalsabschnitt (52) erstreckt, dass die Positionierflächen (64, 66) so ausgebildet sind, dass sie auf gegenüberliegenden Seiten einer quer zu einer Längsmittelebene (30) des Kugelhalses (12) verlaufenden Querebene (60) liegen, wobei die Längsmittelebene (30) des Kugelhalses (12) parallel zur Aufsetzrichtung (82) verläuft.

2. Anhängekupplung nach Anspruch 1, **dadurch gekennzeichnet, dass** die mindestens eine Positionierfläche (64, 66) außerhalb einer Projektionskontur (PK) der Kupplungskugel (26) liegt, welche durch Projektion der Kupplungskugel (26) auf den Positionierkörper entsteht.

3. Anhängekupplung nach einem der voranstehenden Ansprüche und eine Lastenträgerhalteeinrichtung für die den Kugelhals (12) und die Kupplungskugel (26) aufweisende Anhängekupplung (10), wobei die Lastenträgerhalteeinrichtung einen Gehäusekörper (84) mit einer Kugelaufnahme (86) für die Kupplungskugel (26) des Kugelhalses (12) der Anhängekupplung (10) und mindestens ein fest mit dem Gehäusekörper (84) verbundenes Positionsaufnahmeelement (104) umfasst, welches mit dem jeweiligen an dem Kugelhals (12) angeordneten Positionierkörper (54) zusammenwirkt, wobei das Positionsaufnahmeelement (104) zwei einander zugewandte Aufnahmeflächen (114, 116) aufweist und wobei der jeweilige Positionierkörper (54) mit seinem die Positionierfläche (64, 66) tragenden Bereich in einer Lastenträgerhaltestellung zwischen den Aufnahmeflächen (114, 116) des mindestens einen Positionsaufnahmeelements (104) angeordnet ist.

4. Anhängekupplung nach einem der Ansprüche 1 und 2 und Lastenträgerhalteeinrichtung nach Anspruch 3, **dadurch gekennzeichnet, dass** die Lastenträgerhalteeinrichtung (50) eine den Gehäusekörper (84) am Kugelhals (12) festlegende Fixiereinrichtung (140, 170) aufweist, dass insbesondere die Fixiereinrichtung (140, 170) ein Fixierelement (142, 172) aufweist, welches den Gehäusekörper (84) relativ zum Kugelhals in der Lastenträgerhaltestellung fixiert und dass insbesondere das Fixierelement (142, 172) mit der Kupplungskugel (26) oder dem Kugelhals (12) derart zusammenwirkt, dass der Gehäusekörper (84) relativ zur Kupplungskugel (26) oder zum Kugelhals (12) in der Aufsetzrichtung (82) mit einer Aufsetzkraft (184) beaufschlagt ist.

5. Anhängekupplung nach einem der Ansprüche 1 und 2 und Lastenträgerhalteeinrichtung nach Anspruch 4, **dadurch gekennzeichnet, dass** das Fixierelement (142) in einer Fixierstellung an dem Positionierkörper (54) angreift.

6. Anhängekupplung nach einem der Ansprüche 1 und 2 und Lastenträgerhalteeinrichtung nach Anspruch 4, **dadurch gekennzeichnet, dass** das Fixierelement (172) in einer Fixierstellung am Kugelhals (12‴) oder an der Kupplungskugel (26) angreift und dass insbesondere das Fixierelement (172) in der Fixierstellung in die Kugelaufnahme (86) des Gehäusekörpers (84) hineinragt.

7. Anhängekupplung nach einem der Ansprüche 1 und 2 und Lastenträgerhalteeinrichtung nach Anspruch 6, **dadurch gekennzeichnet, dass** das Fixierelement (172) in einem Führungskanal (178) zwischen der Fixierstellung und einer Lösestellung bewegbar geführt ist und dass insbesondere der Führungskanal (178) quer zur Kugelaufnahme (86) verläuft.

8. Anhängekupplung nach einem der Ansprüche 1 und 2 und Lastenträgerhalteeinrichtung nach einem der Ansprüche 6 oder 7, **dadurch gekennzeichnet, dass** das Fixierelement (142, 172) in der Fixierstellung durch eine Betätigungseinrichtung (190) beaufschlagbar ist und dass insbesondere die Betätigungseinrichtung (190) ein Keilgetriebe (210) umfasst.

9. Anhängekupplung nach einem der Ansprüche 1 und 2 und Lastenträgerhalteeinrichtung nach Anspruch 8, **dadurch gekennzeichnet, dass** die Betätigungseinrichtung (190) ein Löseelement (212) umfasst und dass insbesondere beim Betätigen des Löseelements (212) dieses auf das Keilgetriebe (210) einwirkt und dieses in eine Lösestellung bewegt.

10. Anhängekupplung nach einem der Ansprüche 1 und 2 und Lastenträgerhalteeinrichtung nach einem der Ansprüche 8 oder 9, **dadurch gekennzeichnet, dass** die Betätigungseinrichtung (190) mit einer Lösestellungssicherung (220) versehen ist, welche in einer Sicherungsstellung die Betätigungseinrichtung (190) in der Lösestellung hält.

11. Anhängekupplung nach einem der Ansprüche 1 und 2 und Lastenträgerhalteeinrichtung nach Anspruch 10, **dadurch gekennzeichnet, dass** die Lösestellungssicherung (220) in der Sicherungsstellung auf das Keilgetriebe (210) in der Lösestellung blockierend einwirkt.

12. Anhängekupplung nach einem der Ansprüche 1 und 2 und Lastenträgerhalteeinrichtung nach Anspruch 10 oder 11, **dadurch gekennzeichnet, dass** die Lösestellungssicherung (220) mit einer Entsicherungseinrichtung (250) versehen ist, welche die Sicherungsstellung der Lösestellungssicherung (220) dann verhindert oder aufhebt, wenn bei auf dem Kugelhals (12) mit der Kupplungskugel (26) aufsitzender Lastenträgerhalteeinrichtung (50) die Kupplungskugel (26) und der Kugelhals relativ zur Kugelaufnahme (86) in der Lastenträgerhaltestellung steht.

13. Anhängekupplung nach einem der Ansprüche 1 und 2 und Lastenträgerhalteeinrichtung nach einem der Ansprüche 10 bis 12, **dadurch gekennzeichnet, dass** die Lösestellungssicherung (220) selbsttätig in die Sicherungsstellung übergeht, wenn die Betätigungseinrichtung (190) durch Betätigen des Löseelements (212) in die Lösestellung übergeht und die Kupplungskugel (26) in der Kugelaufnahme (86) nicht mehr in der Lastenträgerhaltestellung steht.

## Claims

1. Trailer coupling (10) for motor vehicles comprising a ball neck (12), which is mountable at a first end (14) on a rear part (18) of a motor vehicle to be fixed to the vehicle by means of a ball neck holder (16) and which carries a coupling ball (26) at a second end (24), wherein at least one positioning body (54) is arranged on the ball neck (12) at a defined spacing from the coupling ball (26) to position a load carrier holding arrangement (50) attachable in an attachment direction to the coupling ball (26) and the ball neck (12), wherein the positioning body (54) extends transversely to a course of the ball neck section (52) carrying this positioning body (54), and wherein the positioning body (54) bears at least one positioning face (64, 66), wherein the at least one positioning face (64, 66) is arranged on an outer surface (55) of the positioning body (54), wherein the at least one positioning body (54) has positioning faces (64, 66) arranged on opposite sides, and wherein a respective positioning body (54) is arranged on the ball neck section (52) on mutually opposite sides thereof,
**characterised in that** the positioning bodies are arranged on the ball neck section (52) of the ball neck (12), which adjoins a ball attachment piece (28) of the ball neck (12) that carries the coupling ball (26), **in that** the ball attachment piece (28) is a constriction which is provided between the coupling ball (26) and the second end (24), and which is attached to the second end (24) in a continuation of a course of the ball neck (12) and by means of which the coupling ball (26) is connected to the second end (24), **in that** the positioning bodies (54a, 54b) lie close to the ball attachment piece (28) such that a spacing of a crest line (62) of the positioning bodies (54a, 54b) from the end of the ball neck (12), at which the ball attachment piece (28) begins, is smaller than 1.5 times the extent of the ball attachment piece (28) between the second end (24) and the coupling ball (26), **in that** the positioning bodies (54), starting from the ball neck section (52) which carries them, extend in a direction of extent (59) away from the ball neck section (52), **in that** the direction of extent (59) of the positioning bodies (54) extends transversely to the ball neck section (52) carrying them, **in that** the positioning faces (64, 66) are configured so that they lie on opposite sides of a transverse plane (60) extending transversely to a longitudinal centre plane (30) of the ball neck (12), wherein the longitudinal centre plane (30) of the ball neck (12) extends parallel to the attachment direction (82).

2. Trailer coupling according to claim 1, **characterised in that** the at least one positioning face (64, 66) lies outside a projection contour (PK) of the coupling ball (26), which is formed by projection of the coupling ball (26) onto the positioning body.

3. Trailer coupling according to one of the preceding claims and a load carrying holding arrangement for the trailer coupling (10) comprising the ball neck (12) and the coupling ball (26), wherein the load carrier holding arrangement comprises a housing body (84) with a ball seat (86) for the coupling ball (26) of the ball neck (12) of the trailer coupling (10) and at least one positioning retaining element (104), which is fixedly connected to the housing body (84) and which co-operates with the respective positioning body (54) arranged on the ball neck (12) wherein the positioning retaining element (104) has two seat faces (114, 116) facing towards one another, and wherein the respective positioning body (54) with its region bearing the positioning face (64, 66) is arranged in a load carrier holding position between the seat faces (114, 116) of the at least one positioning retaining element (104).

4. Trailer coupling according to one of claims 1 and 2 and load carrier holding arrangement according to claim 3, **characterised in that** the load carrier holding arrangement (50) has a fixing device (140, 170) that fixes the housing body (84) on the ball neck (12), **in that** in particular the fixing device (140, 170) has a fixing element (142, 172), which fixes the housing body (84) relative to the ball neck in the load carrier holding position, and **in that** in particular the fixing element (142, 172) co-operates with the coupling ball (26) or the ball neck (12) in such a manner that the housing body (84) is subjected to an attachment force (184) relative to the coupling ball (26) or to the ball neck (12) in the attachment direction (82).

5. Trailer coupling according to one of claims 1 and 2 and load carrier holding arrangement according to claim 4, **characterised in that** the fixing element (142) engages on the positioning body (54) in a fixing position.

6. Trailer coupling according to one of claims 1 and 2 and load carrier holding arrangement according to claim 4, **characterised in that** in a fixing position the fixing element (172) acts on the ball neck (12‴) or on the coupling ball (26) and **in that** in particular in the fixing position the fixing element (172) projects into the ball seat (86) of the housing body (84).

7. Trailer coupling according to one of claims 1 and 2 and load carrier holding arrangement according to claim 6, **characterised in that** the fixing element (172) is movably guided in a guide channel (178) between the fixing position and a release position, and **in that** in particular the guide channel (178) runs transversely to the ball seat (86).

8. Trailer coupling according to one of claims 1 and 2 and load carrier holding arrangement according to one of claims 6 or 7, **characterised in that** in the fixing position the fixing element (142, 172) is configured to be acted on by an operating device (190), and **in that** in particular the operating device (190) comprises a wedge gear (210).

9. Trailer coupling according to one of claims 1 and 2 and load carrier holding arrangement according to claim 8, **characterised in that** the operating device (190) comprises a release element (212) and **in that** in particular on actuation of the release element (212) this acts on the wedge gear (210) and moves this into a release position.

10. Trailer coupling according to one of claims 1 and 2 and load carrier arrangement according to one of claims 8 or 9, **characterised in that** the operating device (190) is provided with a release position lock (220), which in a locking position holds the operating device (190) in the release position.

11. Trailer coupling according to one of claims 1 and 2 and load carrier holding arrangement according to claim 10, **characterised in that** in the locking position the release position lock (220) acts in a blocking manner on the wedge gear (210) in the release position.

12. Trailer coupling according to one of claims 1 and 2 and load carrier holding arrangement according to claim 10 or 11, **characterised in that** the release position lock (220) is provided with a lock release arrangement (250), which impedes or cancels the locking position of the release position lock (220) when, in the case where the load carrier holding arrangement (50) sits on the ball neck (12) with the coupling ball (26), the coupling ball (26) and the ball neck are in the load carrier holding position relative to the ball seat (86).

13. Trailer coupling according to one of claims 1 and 2 and load carrier holding arrangement according to one of claims 10 to 12, **characterised in that** the release position lock (220) moves automatically into the locking position when the operating device (190) moves into the release position by actuation of the release element (212) and the coupling ball (26) in the ball seat (86) is no longer in the load carrier holding position.

## Revendications

1. Attelage (10) pour véhicules automobiles, comprenant un col porte-boule (12), qui peut être monté avec une première extrémité (14) au moyen d'un support de col porte-boule (16) de manière fixée au véhicule sur une partie arrière (18) d'un véhicule automobile et qui porte à une deuxième extrémité (24) une boule d'attelage (26), dans lequel au moins un corps de positionnement (54) destiné à positionner un dispositif de retenue de porte-charge (50) pouvant être mis en place dans une direction de mise en place sur la boule d'attelage (26) et le col porte-boule (12) est disposé sur le col porte-boule (12) à une distance définie de la boule d'attelage (26), dans lequel le corps de positionnement (54) s'étend transversalement à un tracé de la partie de col porte-boule (52) portant ce corps de positionnement (54) et dans lequel le corps de positionnement (54) porte au moins une surface de positionnement (64, 66), dans lequel l'au moins une surface de positionnement (64, 66) est disposée sur un côté extérieur (55) du corps de positionnement (54), dans lequel l'au moins un corps de positionnement (54) comporte des surfaces de positionnement (64, 66) disposées sur des côtés opposés les uns aux autres, et dans lequel respectivement un corps de positionnement (54) est disposé sur la partie de col porte-boule (52) sur des côtés opposés les uns aux autres de celle-ci,
**caractérisé en ce que** les corps de positionnement sont disposés sur la partie de col porte-boule (52) du col porte-boule (12), laquelle est adjacente à une excroissance de boule (28), portant la boule d'attelage (26), du col porte-boule (12), **en ce que** l'excroissance de boule (28) est un rétrécissement, qui est prévu entre la boule d'attelage (26) et la deuxième extrémité (24), qui se raccorde à la deuxième extrémité (24) dans le prolongement d'un tracé du col porte-boule (12) et par l'intermédiaire duquel la boule d'attelage (26) est reliée à la deuxième extrémité (24), **en ce que** les corps de positionnement (54a, 54b) se situent à proximité de l'excroissance de boule (28), de telle sorte qu'une distance d'une ligne de sommet (62) des corps de positionnement (54a, 54b) par rapport à l'extrémité du col porte-boule (12), au niveau de laquelle l'excroissance de boule (28) commence, est plus petite que 1,5 fois la dimension de l'excroissance de boule (28) entre la deuxième extrémité (24) et la boule d'attelage (26), **en ce que** les corps de positionnement (54) s'étendent en partant de la partie de col porte-boule (52) portant ceux-ci dans une direction d'étendue (59) à distance de la partie de col porte-boule (52), **en ce que** la direction d'étendue (59) des corps de positionnement (54) s'étend transversalement à la partie de col porte-boule (52) portant ceux-ci, **en ce que** les surfaces de positionnement (64, 66) sont réalisées de sorte qu'elles se situent sur des côtés opposés d'un plan transversal (60) s'étendant transversalement à un plan médian longitudinal (30) du col porte-boule (12), dans lequel le plan médian longitudinal (30) du col porte-boule (12) s'étend parallèlement à la direction de mise en place (82).

2. Attelage selon la revendication 1, **caractérisé en ce que** l'au moins une surface de positionnement (64, 66) se situe à l'extérieur d'un contour de projection (PK) de la boule d'attelage (26), lequel est formé par projection de la boule d'attelage (26) sur le corps de positionnement.

3. Attelage selon l'une des revendications précédentes et dispositif de retenue de porte-charge pour l'attelage (10) comportant le col porte-boule (12) et la boule d'attelage (26), dans lequel le dispositif de retenue de porte-charge comprend un corps de boîtier (84) avec un logement de boule (86) pour la boule d'attelage (26) du col porte-boule (12) de l'attelage (10) et au moins un élément de logement de position (104), qui est relié fixement au corps de boîtier (84) et qui coopère avec le corps de positionnement (54) respectif disposé sur le col porte-boule (12), dans lequel l'élément de logement de position (104) présente deux surfaces de logement (114, 116) tournées l'une vers l'autre et dans lequel le corps de positionnement (54) respectif est disposé avec sa zone portant la surface de positionnement (64, 66) dans une position de retenue de porte-charge entre les surfaces de logement (114, 116) de l'au moins un élément de logement de position (104).

4. Attelage selon l'une des revendications 1 et 2 et dispositif de retenue de porte-charge selon la revendication 3, **caractérisé en ce que** le dispositif de retenue de porte-charge (50) comporte un dispositif de fixation (140, 170) fixant le corps de boîtier (84) sur le col porte-boule (12), **en ce que** notamment le dispositif de fixation (140, 170) présente un élément de fixation (142, 172), lequel fixe le corps de boîtier (84) par rapport au col porte-boule dans la position de retenue de porte-charge et **en ce que** notamment l'élément de fixation (142, 172) coopère avec la boule d'attelage (26) ou le col porte-boule (12), de telle sorte que le corps de boîtier (84) est soumis à une force de mise en place (184) dans la direction de mise en place (82) par rapport à la boule d'attelage (26) ou au col porte-boule (12) .

5. Attelage selon l'une des revendications 1 et 2 et dispositif de retenue de porte-charge selon la revendication 4, **caractérisé en ce que** l'élément de fixation (142), dans une position de fixation, vient en contact avec le corps de positionnement (54).

6. Attelage selon l'une des revendications 1 et 2 et dispositif de retenue de porte-charge selon la revendication 4, **caractérisé en ce que** l'élément de fixation (172), dans une position de fixation, vient en contact avec le col porte-boule (12"') ou avec la boule d'attelage (26) et **en ce que** notamment l'élément de fixation (172), dans la position de fixation, fait saillie dans le logement de boule (86) du corps de boîtier (84).

7. Attelage selon l'une des revendications 1 et 2 et dispositif de retenue de porte-charge selon la revendication 6, **caractérisé en ce que** l'élément de fixation (172) est guidé dans un canal de guidage (178) de manière mobile entre la position de fixation et une position de libération et **en ce que** notamment le canal de guidage (178) s'étend transversalement au logement de boule (86).

8. Attelage selon l'une des revendications 1 et 2 et dispositif de retenue de porte-charge selon l'une des revendications 6 ou 7, **caractérisé en ce que** l'élément de fixation (142, 172), dans la position de fixation, peut être sollicité par un dispositif d'actionnement (190) et **en ce que** notamment le dispositif d'actionnement (190) comprend une transmission à clavette (210).

9. Attelage selon l'une des revendications 1 et 2 et dispositif de retenue de porte-charge selon la revendication 8, **caractérisé en ce que** le dispositif d'actionnement (190) comprend un élément de libération (212) et **en ce que** notamment, lors de l'actionnement de l'élément de libération (212), celui-ci agit sur la transmission à clavette (210) et déplace celle-ci dans une position de libération.

10. Attelage selon l'une des revendications 1 et 2 et dispositif de retenue de porte-charge selon l'une quelconque des revendications 8 ou 9, **caractérisé en ce que** le dispositif d'actionnement (190) est pourvu d'un verrouillage de position de libération (220), lequel, dans une position de verrouillage, maintient le dispositif d'actionnement (190) dans la position de libération.

11. Attelage selon l'une des revendications 1 et 2 et dispositif de retenue de porte-charge selon la revendication 10, **caractérisé en ce que** le verrouillage de position de libération (220), dans la position de verrouillage, agit sur la transmission à clavette (210) de manière à la bloquer dans la position de libération.

12. Attelage selon l'une des revendications 1 et 2 et dispositif de retenue de porte-charge selon la revendication 10 ou 11, **caractérisé en ce que** le verrouillage de position de libération (220) est pourvu d'un dispositif de déverrouillage (250), lequel empêche ou débloque la position de verrouillage du verrouillage de position de libération (220) lorsque, lorsque le dispositif de retenue de porte-charge (50) repose sur le col porte-boule (12) avec la boule d'attelage (26), la boule d'attelage (26) et le col porte-boule se trouvent dans la position de retenue de porte-charge par rapport au logement de boule (86).

13. Attelage selon l'une des revendications 1 et 2 et dispositif de retenue de porte-charge selon l'une des revendications 10 à 12, **caractérisé en ce que** le verrouillage de position de libération (220) passe automatiquement dans la position de verrouillage, lorsque le dispositif d'actionnement (190) passe dans la position de libération par actionnement de l'élément de libération (212) et la boule d'attelage (26) dans le logement de boule (86) ne se trouve plus dans la position de retenue de porte-charge.
